# EUROPÄISCHE PATENTSCHRIFT

(11) **EP 3 243 959 B1**
(45) Veröffentlichungstag und Bekanntmachung des Hinweises auf die Patenterteilung: **05.12.2018**
(21) Anmeldenummer: 17169868.1
(22) Anmeldetag: 08.05.2017
(51) Int. Cl.: E01C 23/088

(54) **VERFAHREN ZUR LAUFRICHTUNGSABWEICHENDEN SEITWÄRTSBEWEGUNG EINER BODENBEARBEITUNGSMASCHINE UND ZUR AUSFÜHRUNG DIESES VERFAHRENS AUSGEBILDETE BODENBEARBEITUNGSMASCHINE**
METHOD FOR SIDEWARD MOVEMENT OF SOIL MODIFYING MACHINE DEVIATING FROM DIRECTION OF TRAVEL AND SOIL MODIFYING MACHINE FOR CARRYING OUT SAID METHOD
PROCÉDÉ DE DÉPLACEMENT LATÉRAL S'ÉCARTANT DU SENS DE LA MARCHE D'UNE MACHINE DE TRAVAIL DU SOL ET MACHINE DE TRAVAIL DU SOL CONÇUE POUR EXÉCUTER LEDIT PROCÉDÉ

(30) Priorität: 12.05.2016 DE 102016208246
(43) Veröffentlichungstag der Anmeldung: 15.11.2017
(73) Patentinhaber: Wirtgen GmbH, 53578 Windhagen (DE)
(72) Erfinder: Held, Hanjo, 63578 Windhagen (DE); Berning, Christian, 53909 Zülpich (DE); Barimani, Cyrus, 53639 Königswinter (DE)
(74) Vertreter: Ruttensperger Lachnit Trossin Gomoll

(56) Entgegenhaltungen:
- WO-A1-2016/199176
- DE-A1- 2 932 792
- DE-A1-102013 005 594
- US-A- 3 266 846
- US-A1- 2016 040 372

## Beschreibung

Die vorliegende Erfindung betrifft ein Verfahren zur Seitwärtsbewegung einer Bodenbearbeitungsmaschine, wie etwa Straßenfräse, Recycler oder Surface-Miner, wobei die Bodenbearbeitungsmaschine einen Maschinenrahmen aufweist, welcher über ein Fahrwerk auf einer Aufstandsoberfläche eines Untergrunds aufsteht, wobei das Fahrwerk wenigstens ein vorderes Laufwerk und wenigstens ein hinteres Laufwerk aufweist, welche Laufwerke dazu ausgebildet sind, auf dem Untergrund in einer Laufrichtung abzurollen, wobei das wenigstens eine vordere Laufwerk und das wenigstens eine hintere Laufwerk relativ zum Maschinenrahmen um eine dem jeweiligen Laufwerk zugeordnete Lenkachse drehbar sind, so dass die Laufrichtung des jeweiligen Laufwerks mit der Maschinenrahmenlängsrichtung einen veränderbaren Lenkwinkel einschließt. Die vorliegende Erfindung betrifft weiter eine zu einem derartigen Verfahren ausgebildete Bodenbearbeitungsmaschine.

Gattungsgemäße Bodenbearbeitungsmaschinen sind bekannt aus der DE 10 2013 005 594 A1 und aus der US 2016/0040372 A1.

Bodenbearbeitungsmaschinen - nachfolgend auch nur kurz als "Maschinen" bezeichnet -, wie beispielsweise Straßenfräsen, Recycler oder Surface-Miner, weisen häufig lösbar am Maschinenrahmen aufgenommene Arbeitseinrichtungen mit einer großen Masse von bis zu mehreren Tonnen auf, die sich im betriebsbereiten Zustand der Bodenbearbeitungsmaschine in Maschinenrahmenquerrichtung über die gesamte oder nahezu die gesamte Maschinenbreite oder sogar über die Maschinenbreite hinaus erstrecken. Eine solche Arbeitseinrichtung ist üblicherweise an einer zum Aufstandsuntergrund der Bodenbearbeitungsmaschine weisenden Unterseite des Maschinenrahmens angeordnet. Ein in der Arbeitseinrichtung aufgenommenes Arbeitsgerät liegt zum Untergrund hin frei, um einen Bearbeitungseingriff mit dem Boden bzw. Untergrund zu ermöglichen. Die Arbeitseinrichtung ist bevorzugt eine Fräseinrichtung, mit einer Fräswalze als Arbeitsgerät, die drehbar in einem Fräskasten bzw. Fräswalzengehäuse aufgenommen ist.

Von Zeit zu Zeit ist die Arbeitseinrichtung der Bodenbearbeitungsmaschine auszutauschen - beispielsweise zur Aus- oder zur Umrüstung der Maschine, etwa um diese an unterschiedliche Bearbeitungsaufgaben anzupassen. Mitunter muss der Austausch der Arbeitseinrichtung oder des Arbeitsgeräts an der Baustelle selbst erfolgen, die hierzu in der Regel weitaus weniger gut ausgerüstet ist als eine hierfür hergerichtete Wartungshalle beim Hersteller oder Betreiber der Maschine.

Die Abmessungen der Arbeitseinrichtung in Maschinenbreite oder/und ihr Gewicht erfordern in manchen Fällen einen gesonderten Transport von Maschinenrahmen und Arbeitseinrichtung zum Einsatzort und die Herstellung der Betriebsbereitschaft vor Ort.

Die Abmessungen der Arbeitseinrichtung in Maschinenbreite verhindern in der Regel, dass der Maschinenrahmen nach einem Lösen der Arbeitseinrichtung von diesem mit dem Fahrwerk in Vorwärts- oder Rückwärtsfahrtrichtung über die gelöste Arbeitseinrichtung kollisionsfrei hinwegfahren kann oder durch Vorwärts- oder Rückwärtsfahrt sich kollisionsfrei über eine neu aufzunehmende Arbeitseinrichtung bewegen kann. Insbesondere bei einem Wechsel der Fräswalze, etwa um die Maschine auf eine andere Bearbeitungsbreite umzurüsten, muss die Fräswalze in der Regel in Maschinenquerrichtung aus dem Fräswalzengehäuse entnommen oder in dieses eingeführt werden.

Die große Masse einer typischen Arbeitseinrichtung oder eines austauschbaren Arbeitsgeräts verhindert außerdem, dass die Arbeitseinrichtung oder das Arbeitsgerät ohne Weiteres in Maschinenrahmenquerrichtung unter den Maschinenrahmen zur betriebsbereiten Festlegung an diesem verbracht werden kann. Hierzu ist wenigstens eine Transporteinrichtung notwendig, wie sie beispielsweise aus der DE 10 2011 018 222 B4 bekannt ist, die jedoch gerade an Baustellen nicht immer verfügbar ist oder aufgrund begrenzten Rangierraums selbst im Falle ihrer Verfügbarkeit nicht immer einsetzbar ist.

Die eingangs genannten gattungsgemäßen Druckschriften lehren als mögliche Lösung, um den Maschinenrahmen in Maschinenrahmenquerrichtung von einer abzurüstenden Arbeitseinrichtung oder deren Arbeitsgerät weg zu bewegen bzw. über eine neu aufzurüstende Arbeitseinrichtung oder deren Arbeitsgerät zu bewegen, die Laufwerke einer Bodenbearbeitungsmaschine so zu drehen, dass ihre Laufrichtung in Maschinenrahmenquerrichtung weist und dann die Maschine bzw. den Maschinenrahmen entsprechend der eingestellten Laufrichtung des Fahrwerks bzw. seiner einzelnen auf dem Boden aufstehenden Laufwerke in Maschinenrahmenquerrichtung zu verfahren.

Nachteilig an dieser bekannten Lösung ist der mit der Umorientierung der Laufwerke in Maschinenrahmenquerrichtung verbundene Aufwand. Üblicherweise gestattet nämlich die Lenkung eines Laufwerks keinen Lenkwinkel von 90° bezogen auf die Maschinenrahmenlängsrichtung. Definitionsgemäß weist die Laufrichtung bei einem Lenkwinkel von 0° längs der Maschinenrahmenlängsrichtung in Vorwärtsrichtung. Um die Laufrichtung von Laufwerken in Maschinenrahmenquerrichtung zu orientieren, ist somit entweder zusätzlich zur Lenkung ein weiterer Verdrehmechanismus vorzusehen oder die Lenkung eines Laufwerks ist für die Ausrichtung seiner Laufrichtung in Maschinenrahmenquerrichtung vorübergehend umzurüsten.

Es ist daher Aufgabe der vorliegenden Erfindung, eine gattungsgemäße Bodenbearbeitungsmaschine derart weiterzubilden, dass sie ohne den im Stand der Technik notwendigen Aufwand an Vorrichtungen und Montage seitwärts bewegt werden kann, etwa um den Maschinenrahmen in Maschinenrahmenquerrichtung von einer abzurüstenden Arbeitseinrichtung oder deren Arbeitsgerät weg oder/und über eine aufzurüstende Arbeitseinrichtung oder deren Arbeitsgerät bewegen zu können.

Erfindungsgemäß löst die vorliegende Erfindung diese Aufgabe durch ein Verfahren der eingangs genannten Art, bei welchem die verfahrensgemäße Seitwärtsbewegung in einer Seitwärtsrichtung erfolgt, welche von der durch die jeweiligen Lenkwinkel bestimmten Fahrtrichtung der Bodenbearbeitungsmaschine abweicht, wobei das Verfahren folgende Schritte umfasst:
- Neigen des wenigstens einen lenkbaren vorderen Laufwerks relativ zur Aufstandsoberfläche um eine sowohl mit der zugeordneten Lenkachse als auch mit der Laufrichtung des Laufwerks einen Winkel, vorzugsweise einen rechten Winkel, einschließende vordere Neigeachse in einem ersten Neigesinn derart, dass ein Schwenkpunkt, um den das geneigte Laufwerk bei Ausübung eines Lenkmoments um die Lenkachse relativ zum Untergrund schwenkt, von einem virtuellen Durchstoßpunkt, in welchem die zum Untergrund hin verlängert gedachte Lenkachse die Aufstandsoberfläche durchstößt, weg verlagert wird,
- Drehen des geneigten wenigstens einen vorderen Laufwerks relativ zum Maschinenrahmen um die Lenkachse in einem ersten Drehsinn und dadurch Schwenken des geneigten wenigstens einen vorderen Laufwerks relativ zum Untergrund um den vom Durchstoßpunkt weg verlagerten Schwenkpunkt,
- Neigen des wenigstens einen lenkbaren hinteren Laufwerks relativ zur Aufstandsoberfläche um eine sowohl mit der zugeordneten Lenkachse als auch mit der Laufrichtung des Laufwerks einen Winkel, vorzugsweise einen rechten Winkel, einschließende hintere Neigeachse in einem zweiten Neigesinn derart, dass ein Schwenkpunkt, um den das geneigte Laufwerk bei Ausübung eines Lenkmoments um die Lenkachse relativ zum Untergrund schwenkt, von einem virtuellen Durchstoßpunkt, in welchem die zum Untergrund hin verlängert gedachte Lenkachse die Aufstandsoberfläche durchstößt, weg verlagert wird,
- Drehen des geneigten wenigstens einen hinteren Laufwerks relativ zum Maschinenrahmen um die Lenkachse in einem zweiten Drehsinn und dadurch Schwenken des geneigten wenigstens einen hinteren Laufwerks relativ zum Untergrund um den vom Durchstoßpunkt weg verlagerten Schwenkpunkt.

Die vorliegende Erfindung löst die eingangs genannte Aufgabe auch durch eine gattungsgemäße Bodenbearbeitungsmaschine, bei welcher die Bodenbearbeitungsmaschine eine Neigevorrichtung aufweist, durch welche das wenigstens eine lenkbare vordere Laufwerk relativ zur Aufstandsoberfläche um eine sowohl mit der zugeordneten Lenkachse als auch mit der Laufrichtung des Laufwerks einen Winkel, vorzugsweise einen rechten Winkel, einschließenden vordere Neigeachse neigbar ist, und durch welche das wenigstens eine lenkbare hintere Laufwerk um eine sowohl mit der zugeordneten Lenkachse als auch mit der Laufrichtung des Laufwerks einen Winkel, vorzugsweise einen rechten Winkel, einschließenden hinteren Neigeachse neigbar ist.

Durch die Neigevorrichtung der Laufwerke können an der erfindungsgemäßen Bodenbearbeitungsmaschine die nachfolgend erläuterten Neigeschritte und gegebenenfalls auch Gegenneigeschritte ausgeführt werden. Die nachfolgend ebenfalls näher erläuterten Drehschritte und gegebenenfalls auch Gegendrehschritte können mit einer Lenkeinrichtung der Bodenbearbeitungsmaschine ausgeführt werden, durch welche die Lenkwinkel des wenigstens einen vorderen Laufwerks und des wenigstens einen hinteren Laufwerks veränderbar sind. Die Lenkeinrichtung kann mehrere Lenkvorrichtungen umfassen, etwa eine für alle vorderen Laufwerke und eine weitere für alle hinteren Laufwerke oder je eine pro Laufwerk.

Ein Laufwerk einer Bodenbearbeitungsmaschine, welches über ein Stützrad, eine Mehrzahl von Stützrädern oder über eine Laufkette auf dem Untergrund abrollen kann, berührt die Aufstandsoberfläche des Untergrunds aufgrund seiner im Aufstandsbereich belastungsbedingt unvermeidlichen Verformung in einem flächigen Aufstandsfleck. Im Aufstandsfleck wird daher die auf das jeweilige Laufwerk entfallende Traglast als Flächenlast in den Untergrund abgeleitet. In der Realität wird sich innerhalb des Aufstandsflecks eine Hauptlastzone mit lokal erhöhten Flächenlastwerten und wenigstens eine Nebenlastzone ausbilden, in welcher die Flächenlast geringer als in der Hauptlastzone ist. Grundsätzlich ließen sich mehr als zwei Zonen lokal unterschiedlicher Flächenlasten im Aufstandsfleck definieren, vorliegend sollen jedoch zwei Zonen zu Erläuterungszwecken ausreichen. Zur weiteren Erläuterung sei als Flächenlast der Hauptlastzone und als Flächenlast der Nebenlastzone jeweils vereinfacht ein Mittelwert der Flächenlast innerhalb dieser Zonen angenommen.

Da die zwischen Untergrund und Laufwerk wirkende Reibkraft abhängig von der lokal wirkenden Normalkraft und damit von der Flächenlast ist, wird am Laufwerk im Falle einer Ausübung eines Lenkmoments um die ihm zugeordnete Lenkachse eine die Änderung der Laufrichtung des Laufwerks bewirkende drehende Schlupfbewegung zwischen dem Laufwerk und dem Untergrund zuerst in der Nebenlastzone und zuletzt in der Hauptlastzone einsetzen. Daher liegt der Schwenkpunkt, um den ein gelenktes Laufwerk bei einem Lenkvorgang relativ zum Untergrund schwenkt, in der Hauptlastzone. Bei gewöhnlichem Abroll-Fahrbetrieb, in welchem die Laufwerke längs ihrer Laufrichtung auf dem Untergrund abrollen, durchstößt die zum Untergrund hin verlängert gedachte Lenkachse eines Laufwerks den Aufstandsfleck des Laufwerks in der Hauptlastzone, wobei idealerweise der Durchstoßpunkt der Lenkachse durch den Untergrund und der Schwenkpunkt des Laufwerks relativ zum Untergrund zusammenfallen. Das Laufwerk führt dann bei einem Lenkvorgang idealerweise eine reine Drehbewegung um die Lenkachse aus.

Durch den erfindungsgemäß angewandten Neigeschritt wird die Hauptlastzone und damit wiederum der Schwenkpunkt, um den das Laufwerk relativ zum Untergrund dreht, je nach Neigesinn in oder entgegen der Laufrichtung des Laufwerks vom Durchstoßpunkt weg verlagert. Diese Verlagerung bleibt bestehen, solange das Laufwerk geneigt ist. Wird in diesem geneigten Zustand das Laufwerk relativ zum Maschinenrahmen um seine Lenkachse gedreht, schwenkt das Laufwerk relativ zum Untergrund um den Schwenkpunkt, sodass die Lenkachse eine Teilkreisbewegung um den Schwenkpunkt des Laufwerks ausführt. Dabei entspricht der Radius des Teilkreises dem Abstand zwischen Lenkachse und Schwenkpunkt. Der überstrichene Sektorwinkel des Teilkreises entspricht der Lenkwinkeländerung des Laufwerks.

Da die Lenkachse während eines Lenkvorgangs konstruktiv bedingt maschinenrahmenfest ist, bewegt sich im Bereich der Lenkachse der Maschinenrahmen ebenfalls längs dieser Teilkreisbahn, die bei geeigneter Wahl des Anfangs- und des Endlenkwinkels des Laufwerks eine große Komponente in Maschinenrahmenquerrichtung und eine verglichen mit dieser nur geringe Bewegungskomponente in Maschinenrahmenlängsrichtung aufweist. Durch entsprechendes Neigen und anschließendes Drehen sowohl des wenigstens einen vorderen Laufwerks als auch des wenigstens einen hinteren Laufwerks kann somit der vollständige Maschinenrahmen seitwärts, also in Maschinenrahmenquerrichtung, bewegt werden, ohne dass eines oder mehrere Laufwerke der Maschine hierzu in Maschinenrahmenquerrichtung ausgerichtet sein müssen. Somit kann die Maschine mit der für den gewöhnlichen Abroll-Fahrbetrieb bereitgestellten Lenkeinrichtung in Maschinenrahmenquerrichtung bewegt werden, obwohl die Lenkeinrichtung selbst einen der erzielten Maschinenbewegungsrichtung entsprechenden Lenkeinschlag konstruktiv nicht zulässt.

Es sei an dieser Stelle angemerkt, dass die Bodenbearbeitungsmaschine bevorzugt eine Lenkeinrichtung aufweist, deren Lenkbetrieb der Ackermann-Bedingung genügt, sodass für die Abrollebene eines jeden gelenkten Laufwerks ein zu dieser orthogonaler Radiusstrahl existiert, wobei sich alle Radiusstrahlen von Laufwerken mit Lenkeinschlag im Momentanpol der Maschine treffen, um welchen die Maschine bei gewöhnlichem Abroll-Kurvenfahrbetrieb dreht. Aufgrund der bevorzugten Einhaltung der Ackermann-Bedingung weicht die Fahrtrichtung der Maschine bei Kurvenfahrt von den Laufrichtungen der einzelnen gelenkten Laufwerke geringfügig ab.

Es sei weiter klargestellt, dass es ausreicht, wenn die Neigebewegung eine Gewichtsverlagerung im Aufstandsbereich eines Laufwerks und infolgedessen eine Verlagerung des Schwenkpunkts bewirkt. Das Laufwerk muss nicht so stark geneigt werden, dass es am Durchstoßpunkt der Lenkachse von der Aufstandsoberfläche des Untergrundes abhebt, wenngleich dies nicht ausgeschlossen sein soll.

Mit den erfindungsgemäß vorgeschlagenen Neigeschritten und anschließendem Drehen des geneigten wenigstens einen vorderen und hinteren Laufwerks kann der gesamte Maschinenrahmen in Maschinenrahmenquerrichtung verlagert werden.

Eine noch größere Distanz in Maschinenrahmenquerrichtung kann zurückgelegt werden, wenn man im Rahmen des erfindungsgemäßen Verfahrens folgende weitere Schritte ausführt:
- Gegenneigen des wenigstens einen vorderen Laufwerks relativ zur Aufstandsoberfläche um die Neigeachse in einem dem ersten Neigesinn entgegengesetzten Neigesinn und dadurch Verlagern des Schwenkpunktes zu einem vom Durchstoßpunkt entfernt gelegenen Ort derart, dass der Durchstoßpunkt am Ende des Gegenneigens zwischen dem aktuellen Schwenkpunkt und dem Ort des Schwenkpunktes nach dem letzten Schwenken gelegen ist,
- Gegendrehen des gegengeneigten wenigstens einen vorderen Laufwerks relativ zum Maschinenrahmen um die Lenkachse in einem dem ersten Drehsinn entgegengesetzten Drehsinn und dadurch Gegenschwenken des gegengeneigten wenigstens einen vorderen Laufwerks relativ zum Untergrund um den vom Durchstoßpunkt weg verlagerten Schwenkpunkt,

- Gegenneigen des wenigstens einen hinteren Laufwerks relativ zur Aufstandsoberfläche um die Neigeachse in einem dem zweiten Neigesinn entgegengesetzten Neigesinn und dadurch Verlagern des Schwenkpunktes zu einem vom Durchstoßpunkt entfernt gelegenen Ort derart, dass der Durchstoßpunkt am Ende des Gegenneigens zwischen dem aktuellen Schwenkpunkt und dem Ort des Schwenkpunktes nach dem letzten Schwenken gelegen ist,
- Gegendrehen des gegengeneigten wenigstens einen hinteren Laufwerks relativ zum Maschinenrahmen um die Lenkachse in einem dem zweiten Drehsinn entgegengesetzten Drehsinn und dadurch Gegenschwenken des gegengeneigten wenigstens einen hinteren Laufwerks relativ zum Untergrund um den vom Durchstoßpunkt weg verlagerten Schwenkpunkt.

Neigen und Gegenneigen sind einander im Wesentlichen entsprechende Vorgänge mit dem Unterschied, dass der Neigesinn beim Gegenneigen jenem des Neigens entgegengesetzt ist. Erfolgt das Gegenneigen ausgehend vom geneigten Zustand des Laufwerks, wird der Aufstandsfleck und mit diesem der Schwenkpunkt des Laufwerks relativ zum Untergrund zunächst an den Durchstoßpunkt angenähert und dann unter Beibehaltung der Verlagerungsrichtung jenseits des Durchstoßpunktes wieder von diesem entfernt.

Das Gegenneigen kann in Teilschritten ausgeführt werden, beispielsweise indem zunächst in einem ersten Teilschritt das geneigte Laufwerk zurück in die ungeneigte Stellung bewegt wird, in der es sich bei herkömmlichem Abroll-Fahrbetrieb befindet. In einem zweiten Teilschritt kann dann das Gegenneigen ausgehend von der zuvor erreichten ungeneigten Abroll-Stellung des Abroll-Fahrbetriebs erfolgen. Dabei soll nicht ausgeschlossen sein, dass in der zwischen den beiden genannten Teilschritten erreichten Abroll-Stellung des Laufwerks dieses Laufwerk eine vom Gegenneigen abweichende Bewegung ausführt, beispielsweise indem das Laufwerk aufgrund eines auf es ausgeübten Lenkmoments dreht oder/und zur Feinjustierung der Maschine in Vorwärts- oder/und Rückwärtsrichtung abrollt.

Zu Beginn eines Gegenneigeschrittes sind die Neigeachse des Gegenneigeschrittes und jene am Ende des unmittelbar vorhergehenden Neigeschrittes identisch. Gerade bei in Laufrichtung länglichen Laufwerken, wie sie beispielsweise Kettenlaufwerke darstellen, kann sich die Lage der Neigeachse relativ zu Laufwerk und Untergrund während eines Neigeschrittes verlagern. Die Verlagerung der Neigeachse erfolgt in der Regel orthogonal zur Erstreckungsrichtung der Neigeachse, das ist üblicherweise parallel zur Laufrichtung des jeweiligen Laufwerks. Sofern es beim Neigen und Gegenneigen eines Laufwerks zu einer Verlagerung der Neigeachse kommt, soll der Begriff "die Neigeachse" die ortsveränderliche Neigeachse in allen ihren End- und Zwischenlagen und -orientierungen bezeichnen.

Da der Schwenkpunkt des Laufwerks nach dem Gegenneigen auf der anderen Seite einer zur Laufrichtung des Laufwerks orthogonalen und den Durchstoßpunkt enthaltenden Ebene gelegen ist als nach dem dem Gegenneigen vorhergehenden Drehen, muss ein und dasselbe Laufwerk nach dem Gegenneigen mit einem dem Drehsinn des nach dem Neigen ausgeführten Drehschrittes entgegengesetzten Drehsinn gegengedreht werden, um den mit dem Laufwerk verbundenen Maschinenrahmen weiter in dieselbe Richtung seitwärts zu bewegen, in die er bereits beim Drehen nach dem Neigen bewegt wurde.

Somit kann eine nahezu beliebig große Strecke in Maschinenrahmenquerrichtung zurückgelegt werden, wenn die Schritte des Neigens und Drehens einerseits und des Gegenneigens und Gegendrehens andererseits iterativ und alternierend an den beteiligten Laufwerken ausgeführt werden, d. h. an ein und demselben Laufwerk findet nacheinander ein Neigen, Gegenneigen, Neigen, Gegenneigen usw. statt, wobei zwischen jedem Neigeschritt und einem Gegenneigeschritt ein Drehschritt ausgeführt wird und zwischen jedem Gegenneigeschritt und einem Neigeschritt ein Gegendrehschritt.

Bevorzugt sind die Lenkwinkeländerungen an einem Laufwerk, besonders bevorzugt an allen Laufwerken, beim Drehen und Gegendrehen betragsmäßig gleich groß, sodass sich die aufgrund der Teilkreisbewegung unvermeidlichen Bewegungskomponenten des Maschinenrahmens in Maschinenrahmenlängsrichtung gegenseitig annullieren, vorzugsweise für jedes Paar von Dreh- und Gegendrehschritt gegenseitig annullieren.

Der erste und der zweite Neigesinn, also die Neigesinne des wenigstens einen vorderen Laufwerks und des wenigstens einen hinteren Laufwerks beim Neigen können gleichsinnig sein, was erfordert, dass dann auch der erste und der zweite Drehsinn des nach dem Neigen ausgeführten Drehschritts gleichsinnig sind. Folgerichtig sind dann auch Neigesinne beim Gegenneigen und die Drehsinne beim Gegendrehen gleichsinnig. Der Vorteil von gleichsinnigem Neigen und Gegenneigen liegt darin, dass sich der Abstand der Schwenkpunkte der einzelnen Laufwerke relativ zueinander nicht oder nur in vernachlässigbarem Umfang ändert, was das Auftreten unerwünschter, weil unkontrollierbarer Schlupfbewegungen der Laufwerke relativ zum Untergrund während des Drehens oder/und Gegendrehens erheblich reduziert.

Alternativ können der erste und der zweite Neigesinn jedoch auch gegensinnig sein, was wiederum erfordert, dass auch der erste und der zweite Drehsinn gegensinnig sind. In diesem Falle ändert sich der Abstand der Schwenkpunkte des wenigstens einen vorderen Laufwerks einerseits und des wenigstens einen hinteren Laufwerks andererseits zwischen Neigen und Drehen einerseits und Gegenneigen und Gegendrehen andererseits.

Aufgrund der hierfür erforderlichen Kinematik ist es schwieriger, das wenigstens eine vordere Laufwerk und das wenigstens eine hintere Laufwerk gleichzeitig gegensinnig zu neigen und anschließend zu drehen oder gleichzeitig gegensinnig gegenzuneigen und anschließend gegenzudrehen. Wenngleich gleichzeitiges gegensinniges Neigen und Gegenneigen bzw. gleichzeitiges Drehen und Gegendrehen technisch grundsätzlich möglich sind, so tritt dennoch dabei unvermeidlich zwischen Fahrwerk und Untergrund eine Schlupfbewegung in Maschinenrahmenlängsrichtung auf, von der nicht vorhersagbar ist, ob sie nur am wenigstens einen vorderen Laufwerk, nur am wenigstens einen hinteren Laufwerk oder in einem ebenfalls nicht vorhersagbaren Verhältnis an allen Laufwerken des Fahrwerks auftritt. Dies liegt daran, dass bei gleichzeitigem gegensinnigem Drehen bzw. Gegendrehen von vorderen und hinteren Laufwerken die unvermeidlichen, dann ebenfalls gleichzeitig auftretenden Bewegungskomponenten in Maschinenrahmenlängsrichtung am wenigstens einen vorderen Laufwerk einerseits und am wenigstens einen hinteren Laufwerk andererseits entgegengesetzt gerichtet sind.

Da beim gleichsinnigen Drehen bzw. Gegendrehen die Bewegungskomponenten des Maschinenrahmens im Bereich des wenigstens einen vorderen Laufwerks und im Bereich des wenigstens einen hinteren Laufwerks gleichgerichtet sind, kann die Bewegung in Maschinenrahmenlängsrichtung vom Maschinenrahmen bei gleichzeitigem gleichsinnigen Drehen und Gegendrehen ohne nennenswerten Schlupf zwischen Fahrwerk und Untergrund ausgeführt werden.

Grundsätzlich können das wenigstens eine vordere oder/und das wenigstens eine hintere Laufwerk durch eine gesonderte Neigevorrichtung neigbar sein, welche mittels eines Neigeaktuators, beispielsweise eines hydraulischen Kolben-Zylinder-Aggregats oder eines elektromotorischen Spindeltriebs, die Neigebewegung oder/- und die Gegenneigebewegung eines Laufwerks relativ zur Aufstandsoberfläche des Untergrunds und somit auch relativ zum Maschinenrahmen bewirkt. Hydraulische Energie ist an einer Bodenbearbeitungsmaschine stets bereitgestellt, sodass ein hydraulischer Neigeaktuator ohne Weiteres an der Maschine mit Energie versorgbar ist.

Allerdings ist es bevorzugt, wenn keine gesonderten zusätzlichen Aktuatoren zur Ausführung der Neige- oder Gegenneigebewegung benötigt werden.

Häufig ist an Bodenbearbeitungsmaschinen der Maschinenrahmen höhenveränderlich, beipielsweise über hydraulische Kolben-Zylinder-Anordnungen mit den Laufwerken verbunden, wobei gemäß einer vorteilhaften Weiterbildung der vorliegenden Erfindung die Höhenveränderlichkeit des Maschinenrahmens relativ zu dem wenigstens einen vorderen oder/und dem wenigstens einen hinteren Laufwerk ausgenutzt wird, um die Neigebewegung oder/und die Gegenneigebewegung des jeweiligen Laufwerks relativ zur Aufstandsoberfläche zu bewirken.

Daher kann vorgesehen sein, dass der Maschinenrahmen mit dem wenigstens einen vorderen Laufwerk oder/und mit dem wenigstens einen hinteren Laufwerk über ein Hubwerk derart verbunden ist, dass der Maschinenrahmen um eine zur Maschinerahmenlängsrichtung orthogonale aufstandsoberflächenparallele Nickachse mit veränderlichem Nickwinkel orientierbar ist, wobei das Neigen oder/und das Gegenneigen der lenkbaren Laufwerke relativ zum Untergrund durch Verändern des Nickwinkels des Maschinenrahmens bewirkt wird.

Bei der Veränderung des Nickwinkels des Maschinenrahmens kommt es zu einer Kippbewegung zwischen dem Maschinenrahmen und dem wenigstens einen neigbaren Laufwerk um eine zur Neigeachse des Laufwerks parallele Kippachse. Die Neigevorrichtung kann somit das Hubwerk und eine Kippbegrenzungsvorrichtung umfassen, wobei die Kippbegrenzungsvorrichtung einen bei Änderung des Nickwinkels auftretenden Kippwinkel zwischen Maschinenrahmen und dem wenigstens einen neigbaren Laufwerk auf einen Wert begrenzt, der betragsmäßig kleiner ist als der maximal erreichbare Nickwinkel zwischen Maschinenrahmen und Aufstandsoberfläche.

Aufgrund dieser Winkelbeziehung zwischen dem maximal möglichen Kippwinkel und dem maximal möglichen Nickwinkel kann in einfacher Weise das Neigen des wenigstens einen vorderen Laufwerks oder/und des wenigstens einen hinteren Laufwerks um die Neigeachse durch Änderung des Nickwinkels bewirkt werden. Dann nämlich, wenn der Nickwinkel betragsmäßig den maximal erreichbaren Kippwinkel überschreitet, beginnt bei fortgesetzter Nickbewegung im Sinne einer weiteren betragsmäßigen Vergrößerung des Nickwinkels die Neigebewegung von Laufwerken.

Üblicherweise umfasst das genannte Hubwerk eine längenveränderliche Hubsäule pro Laufwerk, mittels welcher das jeweilige Laufwerk in an sich bekannter Weise in Höhenrichtung relativ zum Maschinenrahmen verlagerbar verbunden ist. Bevorzugt kann die relative Höhenlage eines jeden höhenveränderlich mit dem Maschinenrahmen verbundenen Laufwerks gesondert von der Höhenlage der jeweils übrigen Laufwerke verändert werden. Dies muss jedoch nicht so sein. Es reicht zur Erzielung der erfindungsgemäßen Vorteile aus, wenn nur alle vorderen Laufwerke gemeinsam oder/und nur alle hinteren Laufwerke gemeinsam höhenveränderlich am Maschinenrahmen angeordnet sind.

Der Kippwinkel lässt sich konstruktiv am einfachsten, aber auch am wirkungsvollsten durch einen mechanischen Anschlag begrenzen, sodass gemäß einer vorteilhaften Weiterbildung der vorliegenden Erfindung die Kippbegrenzungsvorrichtung an dem wenigstens einem neigbaren Laufwerk einen mechanischen Anschlag umfasst, welcher durch Veränderung des Nickwinkels des Maschinenrahmens in einen eine Relativverkippung von Maschinenrahmen und Laufwerk um die Kippachse begrenzenden Anlageeingriff mit einem mechanischen Gegenanschlag eines gemeinsam mit dem Maschinenrahmen um die Nickachse rotierbaren Bauteils oder Bauteilabschnitts bringbar ist.

Der mechanische Anschlag kann auch nur vorübergehend gebildet sein, etwa durch vorübergehende Anordnung eines Anschlagbauteils an der Bodenbearbeitungsmaschine. Ein solches Anschlagbauteil kann konstruktiv stabil als Keil ausgebildet sein, dessen eine Keilfläche als Anschlagfläche für einen Anlageeingriff dienen kann. Die bezüglich der Anschlag-Keilfläche um einen Keilwinkel geneigte andere Keilfläche des Keils kann als Lager-Keilfläche zur Lagerung des Keils an der Maschine dienen, etwa am Laufwerk oder an einem maschinenrahmenseitigen Bauteil, wie etwa der Hubsäule oder einer mit der Hubsäule fest verbundenen Struktur.

Vorzugsweise begrenzt die Kippbegrenzungsvorrichtung den Kippwinkel in beide entgegengesetzte Kippsinne um die Kippachse, um sowohl ein Neigen als auch ein Gegenneigen durch das Hubwerk bewirken zu können. Zur individuellen Anpassung des Neigeverhaltens von Laufwerken der hier diskutierten Bodenbearbeitungsmaschine an jeweils vorliegende Randbedingungen ist es vorteilhaft, wenn der mechanische Anschlag oder/und der mechanische Gegenanschlag zur Veränderung des maximal möglichen Kippwinkels zwischen Maschinenrahmen und Laufwerk an dem ihn tragenden Maschinenteil ortsveränderlich vorgesehen ist. Somit kann beispielsweise ein Nickgrenzwinkel betragsmäßig verändert werden, ab dessen Überschreitung die Neigebewegung des wenigstens einen neigbaren Laufwerks einsetzt.

Die Ortsveränderlichkeit von Anschlag oder/und Gegenanschlag kann auch durch das oben genannte nur vorübergehend an die Bodenbearbeitungsmaschine anbringbare Anschlagbauteil realisiert sein, etwa indem Anschlagbauteile unterschiedlicher Abmessungen bereitstehen, um diese an der Maschine anzuordnen. Die Bodenbearbeitungsmaschine kann dafür einen Satz von Anschlagbauteilen mit unterschiedlichen Abmessungen mit sich führen.

In dem zuvor genannten bevorzugten Fall, dass das Hubwerk wenigstens eine längen- bzw. höhenveränderliche Hubsäule umfasst, welche mit dem wenigstens einen neigbaren Laufwerk um die Kippachse kippbar gekoppelt ist, kann konstruktiv der Kopplungsbereich zwischen Hubsäule und Laufwerk für die Ausbildung des oben genannten mechanischen Anschlags und des mechanischen Gegenanschlags genutzt werden. Hierzu kann beispielsweise der mechanische Anschlag an einer Aufnahmestruktur des Laufwerks vorgesehen sein, an welcher ein abrollendes Stützbauteil, wie etwa ein Stützrad, eine Mehrzahl von Stützrädern oder eine Laufkette, umlaufbeweglich aufgenommen ist. Ebenso kann der Gegenanschlag an der Hubsäule oder noch stärker bevorzugt an einer die Hubsäule kippbar mit dem Laufwerk koppelnden Kopplungsstruktur vorgesehen sein. Hierdurch kann die Hubsäule von den während eines Anlageeingriffs von Anschlag und Gegenanschlag auftretenden Kräften entlastet werden.

Grundsätzlich kann daran gedacht sein, dass das wenigstens eine neigbare Laufwerk mit größer werdendem Neigewinkel mit einem Bereich seiner Aufnahmestruktur oder eines Rahmens des Laufwerks auf den Untergrund aufsetzt, sodass bei Überschreiten dieses Neigewinkels das Laufwerk nicht mehr mit einem abrollenden Stützelement auf dem Untergrund aufsteht, sondern mit einem stabilen und eigens dafür ausgebildeten Bereich der zuvor genannten Aufnahmestruktur oder des Laufwerkrahmens. Dieser Bereich kann ein zum Aufstehen auf dem Untergrund ausgebildetes Stützbauteil umfassen.

Demgegenüber ist jedoch bevorzugt, dass dann, wenn das Laufwerk eine Laufkette oder eine Mehrzahl von in Laufrichtung hintereinander angeordneten Stützrädern aufweist, sodass das Laufwerk in Laufrichtung länger als hoch ist. Dann kann in bevorzugter Weiterbildung der vorliegenden Erfindung das wenigstens eine neigbare Laufwerk auch bei relativ zum Untergrund geneigter Stellung mit einem Stützrad oder mit der Laufkette auf der Aufstandsoberfläche aufstehen. Somit kann das Laufwerk stets mit demselben Bauteil bzw. mit derselben Baugruppe auf dem Untergrund aufstehen, die auch bei normalem Abroll-Fahrbetrieb aufsteht und hierfür ausreichend ausgebildet ist.

Bevorzugt weist die Bodenbearbeitungsmaschine der vorliegenden Erfindung eine Steuervorrichtung auf, die dazu ausgebildet ist, auf entsprechende Aktivierung hin eine Seitwärtsbewegungssteuerung auszuführen, nach deren Maßgabe das oben beschriebene Verfahren zur Seitwärtsbewegung der Maschine in eine Seitwärtsrichtung ausführt, welche von der durch die jeweiligen Lenkwinkel bestimmten Fahrtrichtung der Bodenbearbeitungsmaschine abweicht.

Eine derartige Steuervorrichtung kann wenigstens einen Mikroprozessor oder eine speicherprogrammierbare Steuerung umfassen. Die Steuervorrichtung umfasst bevorzugt einen Datenspeicher, in welchem Betriebsparameter für den Maschinenbetrieb, insbesondere für den Fahrbetrieb und Lenkbetrieb, der Maschine abgespeichert und durch die Steuervorrichtung abrufbar sind. Der Begriff "Datenspeicher" kann durch einen volatilen oder/und durch einen nicht-volatilen Datenspeicher realisiert sein. Weiterhin kann wenigstens ein Teil des Datenspeichers als Wechseldatenträger nur vorübergehend mit der Steuervorrichtung verbunden oder verbindbar sein.

Der Datenspeicher kann dynamischen Speicher, einen oder mehrere Speicherbausteine in Form von anwendungsspezifischen integrierten Schaltkreise (ASIC = "Application Specific Integrated Circuits"), Speicherchip-Vorrichtungen, optische oder magnetische Speichervorrichtungen, insbesondere Plattenspeichervorrichtungen, Flash-Speichervorrichtungen, oder ein beliebiges anderes Medium umfassen, welches verwendet werden kann, um Daten in einer für einen Prozessor zugänglichen Art und Weise zu speichern. Der Datenspeicher kann an einer einzelnen Rechnerplattform oder über eine Mehrzahl von Rechnerplattformen hinweg verteilt vorgesehen sein. Der Datenspeicher kann ein Computer-Programmprodukt enthalten, welches eine durch den genannten Prozessor ausführbare Software, Anweisungen oder Programmmodule enthält, die bei ihrer Ausführung Daten bereitstellen oder ein Computersystem in anderer Art und Weise veranlassen können, einen Gegenstand zu implementieren oder in einer definierten Art und Weise betreiben können.

Die Steuervorrichtung weist darüber hinaus bevorzugt ein Eingabe/Ausgabemodul auf, um Befehle oder/und Daten zur Verarbeitung durch den wenigstens einen Mikroprozessor oder die speicherprogrammierbare Steuerung an die Steuervorrichtung einzugeben oder/und durch diese auszugeben. Weiterhin kann die Steuervorrichtung eine Anzeigevorrichtung, etwa einen Bildschirm, umfassen, um einem Maschinenführer Informationen über den aktuellen Betrieb oder über für einen gewünschten Betrieb benötigte Daten und Anweisungen bereitzustellen.

Weiterhin kann die Steuervorrichtung Übertragungsmedien umfassen. Übertragungsmedien können ein beliebiges dinghaftes Medium umfassen, welches dazu dient, einer durch einen Prozessor ausführbaren Software, durch einen Prozessor ausführbaren Anweisungen oder Programmmodulen, die sich auf dem Medium befinden, zu gestatten, von einem Prozessor gelesen und ausgeführt zu werden. Übertragungsmedien umfassen Draht, Kabel, faseroptische und drahtlose Medien, wie sie im Stand der Technik bekannt sind.

Der Begriff "Prozessor" oder "Mikroprozessor", wie er oben gebraucht ist, kann sich wenigstens auf Allzweck- oder für einen spezifischen Zweck ausgebildete Verarbeitungsvorrichtungen oder/und auf eine derartige Logik beziehen, wie sie von einem Durchschnittsfachmann ohne Weiteres verstanden werden wird. Derartige Prozessoren können Single- oder Multithreading-Prozessoren, zentrale Verarbeitungsvorrichtungen, Parent-Prozessoren, Graphikprozessoren und Medienprozessoren und dgl. umfassen, sind jedoch nicht auf solche beschränkt.

Die erfindungsgemäße Bodenbearbeitungsvorrichtung kann weiter Sensoren aufweisen, welche datenübertragungsmäßig mit der Steuervorrichtung verbunden sind, beispielsweise Höhenlagesensoren, welche die Höhenlage des Maschinenrahmens bezüglich des wenigstens einen vorderen Laufwerks und des wenigstens einen hinteren Laufwerks gesondert erfassen können, um daraus erfassen zu können, ob, und wenn ja, in welchem Ausmaß, der Maschinenrahmen bezüglich des Untergrunds, auf dem er aufsteht, um die Nickachse geneigt ist.

Weiterhin können die Sensoren Lenkwinkelsensoren umfassen, um einen Lenkwinkel eines lenkbaren Laufwerks zu erfassen und an die Steuervorrichtung zu übertragen. Die Steuervorrichtung ist dazu ausgebildet, Lenkaktuatoren an der Bodenbearbeitungsmaschine anzusteuern, um den Lenkwinkel eines oder mehrerer Laufwerke zu verändern und ist dazu ausgebildet, Hubaktuatoren anzusteuern, um eine Höhenverstellung des Maschinenrahmens zu bewirken. Die Steuervorrichtung ist überdies dazu ausgebildet, einen Bewegungsantrieb der Maschine sowie die Arbeitseinrichtung zum Betrieb anzusteuern.

Zusätzlich oder alternativ können die Sensoren einen Neigesensor aufweisen, welcher die Neigung des Maschinenrahmens um die Nickachse bezüglich einer zur Schwerkraftwirkungsrichtung orthogonalen Bezugsebene erfasst und an die Steuervorrichtung zu überträgt.

Die Aktivierung der Steuervorrichtung zur Ausführung der Seitwärtsbewegungssteuerung kann durch Drücken einer entsprechenden Taste, durch Umlegen eines Hebels oder durch Betätigen einer Schaltfläche auf einem Monitor bewirkt werden. Die Aktivierung der Seitwärtsbewegung ist auch durch eine Fernsteuervorrichtung denkbar, die von dem Maschinenrahmen räumlich entfernt betätigt werden kann und die durch eine Datenübertragungsverbindung datenübertragend mit der bordeigenen Steuervorrichtung der Bodenbearbeitungsmaschine verbunden ist. Die Datenübertragungsverbindung kann weniger bevorzugt kabelgebunden oder bevorzugt als Funkstrecke ausgebildet sein. Die Fernsteuerung der Maschine aus sicherer Entfernung vom Maschinenrahmen hat den Vorteil, dass ein Maschinenführer sich nicht auf dem Fahrstand befinden muss, während der Maschinenrahmen aufeinanderfolgende Nickbewegungen mit jeweils entgegengesetztem Nicksinn und schubweise Seitwärtsbewegungen ausführt. Gleichwohl soll von der vorliegenden Erfindung auch der Fall umfasst sein, dass die hier beschriebene Seitwärtsbewegung der Bodenbearbeitungsmaschine von einem Maschinenführer ausgelöst und gesteuert wird, der sich auf einem am Maschinenrahmen vorgesehenen Fahrstand befindet.

Bevorzugt ist bei der Bodenbearbeitungsmaschine die Arbeitseinrichtung zwischen dem wenigstens einen vorderen und dem wenigstens einen hinteren Laufwerk am Maschinenrahmen angeordnet, wie dies beispielsweise bei sogenannten "Großfräsen" der Fall ist.

Die vorliegende Erfindung wird nachfolgend anhand der beiliegenden Zeichnungen näher beschrieben. Es stellt dar:
- Figur 1: eine grobschematische Seitenansicht einer erfindungsgemäßen Ausführungsform einer Bodenbearbeitungsmaschine in Form einer Großfräse in einer Stellung für einen Abroll-Fahrbetrieb,
- Figur 2a: eine grobschematische perspektivische Explosionsansicht eines Laufwerks und einer das Laufwerk tragenden Hubsäule der Bodenbearbeitungsmaschine von Figur 1,
- Figur 2b: eine grobschematische Seitenansicht eines Laufwerks mit einer bezüglich Figur 2a alternativen Ausgestaltung von mechanischen Anschlägen,
- Figur 3: eine der Perspektive von Figur 1 entsprechende grobschematische Seitenansicht der Großfräse von Figur 1 mit nach vorne geneigten Laufwerken,
- Figur 4: die Großfräse von Figur 3 mit nach hinten geneigten Laufwerken,
- Figur 4a: eine Detailansicht einer alternativen Ausbildung einer Bodenbearbeitungsmaschine mit gesondertem Neigeaktuator,
- Figur 5: eine grobschematische Darstellung der Aufstandssituation der Großfräse in der Stellung für einen Abroll-Fahrbetrieb von Figur 1,
- Figur 6: die Aufstandssituation bei einer Stellung der Großfräse gemäß Figur 3,
- Fig. 7 bis 10: ein zeitlicher Ablauf von Dreh-, Gegenneige-, Gegendreh-, Neige- und Drehbewegungen zur seitlichen Verlagerung der Großfräse und
- Figur 11: ein Flussdiagramm des erfindungsgemäßen Verfahrens.

Die Bodenbearbeitungsmaschine ist allgemein mit 10 bezeichnet. Sie weist einen Maschinenrahmen 12 auf, welcher in an sich bekannter Weise über vordere höhenveränderliche Hubsäulen 14 und über hintere höhenveränderliche Hubsäulen 16 mit vorderen Laufwerken 18 bzw. mit hinteren Laufwerken 20 verbunden ist. Die vorderen Laufwerke 18 und die hinteren Laufwerke 20 stehen auf einer Aufstandsoberfläche A eines Untergrunds U auf und bilden ein Fahrwerk 22.

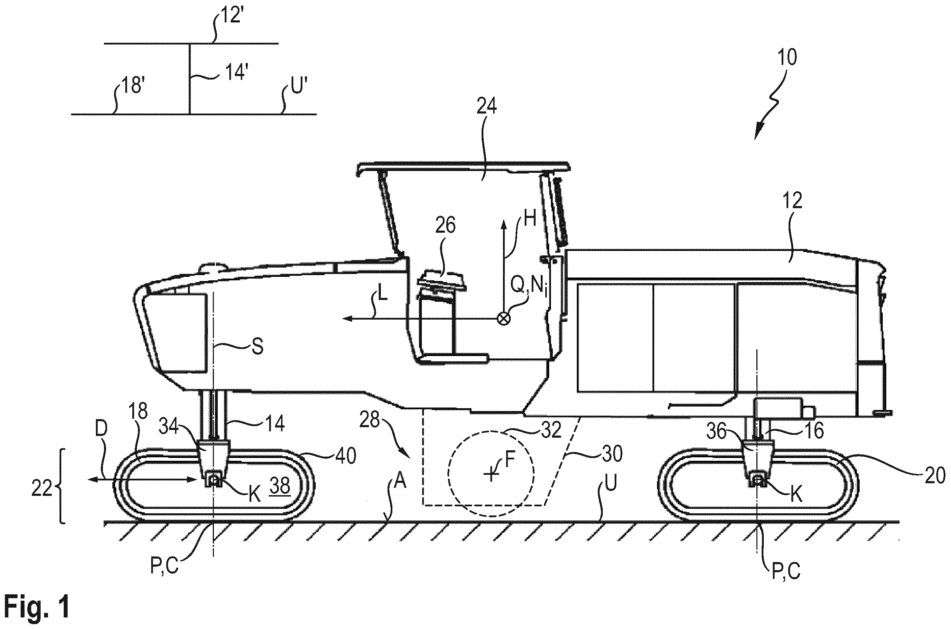

Der Betrachter von Figur 1 blickt auf die Bodenbearbeitungsmaschine oder kurz "Maschine" 10 in Richtung der zur Zeichenebene von Figur 1 orthogonalen Maschinenrahmenquerrichtung Q. Die Maschinenrahmenlängsrichtung ist mit L bezeichnet und verläuft parallel zur Zeichenebene von Figur 1. Die Maschinenhöhenrichtung H verläuft ebenfalls parallel zur Zeichenebene von Figur 1 und orthogonal zur Maschinenlängs- und Maschinenquerrichtung L bzw. Q. Die Pfeilspitze der Maschinenrahmenlängsrichtung L in Figur 1 weist in Vorwärtsrichtung. Im Zweifel ist die Maschinenrahmenhöhenrichtung H parallel zur Verlaufsrichtung der Hubsäulen 14 bzw. 16. Die Maschinenhöhenrichtung H verläuft parallel zur Gierachse der Maschine 10, die Maschinenlängsrichtung L verläuft parallel zur Rollachse und die Maschinenquerrichtung Q verläuft parallel zur Nickachse.

Die Bodenbearbeitungsmaschine 10 kann einen Fahrstand 24 aufweisen, von dem aus ein Maschinenführer über ein Schaltpult 26 die Maschine 10 steuern kann.

Unter dem Maschinenrahmen 12 ist lediglich strichliniert und nur in Figur 1 eine Arbeitseinrichtung 28 angedeutet, hier beispielhaft als Fräseinrichtung 28 mit einer in einem Fräskasten 30 aufgenommenen Fräswalze 32, die um eine in Maschinenrahmenquerrichtung Q verlaufende Fräsachse F rotierbar ist, um damit Untergrundmaterial ausgehend von der Aufstandsoberfläche A mit einer durch die relative Höhenlage des Maschinenrahmens 12 bestimmten Frästiefe abtragen zu können. Die Höhenverstellbarkeit des Maschinenrahmens 12 durch die Hubsäulen 14 und 16 dient daher auch der Einstellung der Fräs- oder allgemein Arbeitstiefe der Maschine 10 bei der Bodenbearbeitung. Es handelt sich bei der beispielhaft dargestellten Bodenbearbeitungsmaschine 10 um eine Großfräse, für die die Anordnung der Fräseinrichtung 28 in Maschinenrahmenlängsrichtung L zwischen den vorderen und den hinteren Laufwerken 18 bzw. 20 typisch ist. Derartige Großfräsen oder auch bodenabtragende Maschinen im Allgemeinen weisen üblicherweise ein Transportband auf, um abgetragenes Bodenmaterial von der Maschine 10 weg zu transportieren. Ein auch bei der Maschine 10 grundsätzlich vorhandenes Transportband ist aus Gründen besserer Übersichtlichkeit in den Figuren nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Die Hubsäule 14 ist in weiterhin an sich bekannter Weise mittels einer Kopplungsstruktur 34 mit dem Laufwerk 18 gekoppelt. Die Kopplungsstruktur 34 umgreift das Laufwerk 18 in Maschinenrahmenquerrichtung Q umgekehrt U-förmig. Die Kopplungsstruktur 34 ist unverkippbar mit der Hubsäule 14 verbunden und ist um eine im dargestellten Beispiel in Maschinenrahmenquerrichtung Q verlaufende Kippachse K relativ zum Laufwerk 18 kippbar.

Die hinteren Hubsäulen 16 sind mit ihrem jeweiligen Laufwerk 20 über eine im Wesentlichen identisch aufgebaute Kopplungsstruktur 36 verbunden, zu deren Beschreibung auf die oben gegebene Beschreibung der Kopplungsstruktur 34 verwiesen wird.

Da die Laufwerke 18 und 20 im Wesentlichen identisch aufgebaut sind, wird nachfolgend stellvertretend für alle Laufwerke lediglich das Laufwerk 18 näher beschrieben werden, dessen Erläuterung auch zur Beschreibung der übrigen Laufwerke heranzuziehen ist.

Das Laufwerk 18 weist im dargestellten Beispiel eine radial innere Aufnahmestruktur 38 auf, an der eine umlaufbare Laufkette 40 angeordnet ist. Die Laufkette 40 kann an der Aufnahmestruktur 38 in einer Abrollebene umlaufen, die im dargestellten Beispiel parallel zur Zeichenebene von Figur 1 und damit parallel zur Maschinenrahmenlängsrichtung L ist. Rollt die Laufkette 40 in der in Figur 1 dargestellten Stellung auf der Aufstandsoberfläche A ab, bewegt sich dadurch das Laufwerk 18 parallel zur Aufstandsoberfläche A abhängig vom Abrollsinn in einer durch den Doppelpfeil D gekennzeichneten Laufrichtung, die in der Abrollebene der Laufkette 40 liegt.

Die Hubsäule 14 und mit ihr das Laufwerk 18 ist durch eine nicht näher dargestellte Lenkvorrichtung um eine Lenkachse S drehbar, wobei ein Durchstoßpunkt P der verlängert zum Untergrund U hin gedachten Lenkachse S die Aufstandsoberfläche A unter der Hubsäule 14 durchstößt.

Bei einem Lenkwinkel von 0° ist die Laufrichtung D des Laufwerks 18 - wie auch aller übrigen Laufwerke - parallel zur Maschinenrahmenlängsrichtung L.

Jedes Laufwerk 18 und 20 weist seine eigene ihm zugeordnete Lenkachse S auf, von welchen in Figur 1 nur die vordere Lenkachse S dargestellt ist. Die Fahrwerke 18 und 20 sind an der Bodenbearbeitungsmaschine 10 bevorzugt nach Maßgabe der bekannten Ackermann-Bedingung lenkbar.

Für die nachfolgende Erläuterung der Relativstellung der Maschine 10 und wesentlicher Bestandteile derselben relativ zum Untergrund U bei der Ausführung des erfindungsgemäßen Verfahrens zur Seitwärtsbewegung der Maschine 10 sind in Figur 1 links oben stark abstrahiert die Maschine 10 und wesentliche Bauteile derselben in ihrer Relativlage relativ zum Untergrund U dargestellt. Der Maschinenrahmen 12 ist stilisiert als waagerechter Strich 12' dargestellt, die Hubsäule 14 als senkrechter Strich 14', der Untergrund als waagerechter Strich U' und das Fahrwerk 18 als mit dem Untergrund U' zusammenfallender waagerechter Strich 18'. Die stilisierte Darstellung gibt den Zustand der Maschine 10 wieder, wenn sie für herkömmlichen Abroll-Fahrbetrieb hergerichtet ist. Der Maschinenrahmen 12 ist im Beispiel bodenparallel.

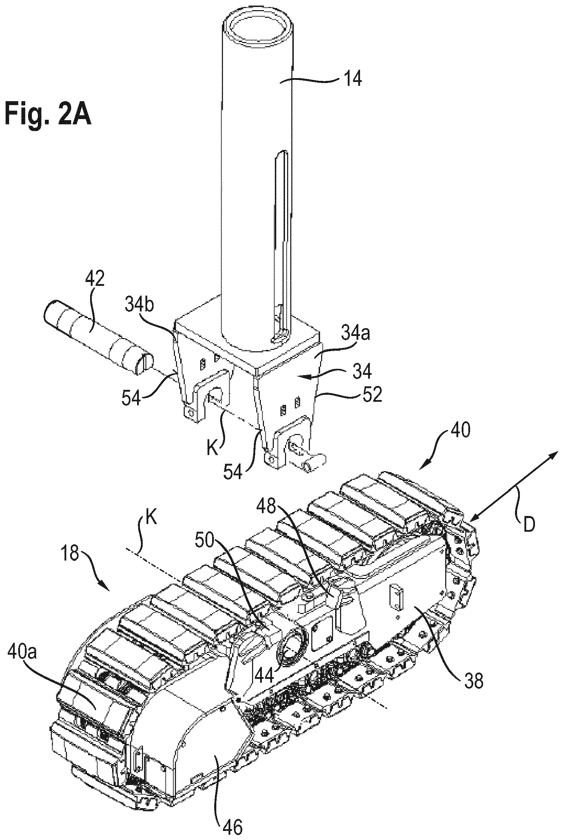

In Figur 2a sind die Hubsäule 14, das Laufwerk 18 und die Kopplungsstruktur 34 detailliert dargestellt. Die Kippachse K, um welche das Laufwerk 18 relativ zur Hubsäule 14 kippen kann, ist bestimmt durch ein Kippachsbauteil 42, welches in fertig montiertem Zustand eine entsprechende Durchgangsöffnung 44 in der Aufnahmestruktur 38 durchsetzt.

An der Aufnahmestruktur 38 kann weiterhin ein hydraulischer Antriebsmotor 46 angeordnet sein, welcher die Laufkette 40 zum Umlauf um die Aufnahmestruktur 38 antreiben kann.

Die Laufkette 40 ist als Gliederkette mit einer Mehrzahl von Kettengliedern 40a ausgebildet, die eine Kunststoffpolsteroberfläche aufweisen, mit welcher sie auf dem Untergrund aufstehen.

Zur Begrenzung des Kippwinkels, um welchen das Laufwerk 18 relativ zur Hubsäule 14 kippen kann, ist an der Aufnahmestruktur 38 auf nur einer Seite, etwa der dargestellten Seite, oder beidseits je ein vorderer mechanischer Anschlag 48 und je ein hinterer mechanischer Anschlag 50 vorgesehen, welche bei entsprechender Kippbewegung in Anlageeingriff mit Flankenflächen 52 bzw. 54 an Seitenwangen 34a und 34b der Kopplungsstruktur 34 gelangen. Somit kann der maximale Kippwinkelbetrag ausgehend von einer Mittelstellung bei horizontaler Ausrichtung des Laufwerks 18 und vertikaler Orientierung der Hubsäule 14 festgelegt sein. Der maximal erreichbare Kippwinkel kann durch eine ortsveränderliche Festlegung der mechanischen Anschläge 48 und 50 an der Aufnahmestruktur 38 veränderbar sein. Solange die Hubsäule 14 ausgehend von einer vertikalen Ausrichtung als Neutralstellung um die Kippachse K relativ zum Laufwerk 18 um weniger als den maximal möglichen Kippwinkel gekippt ist, ist das Laufwerk 18 für einen Abroll-Fahrbetrieb bereit.

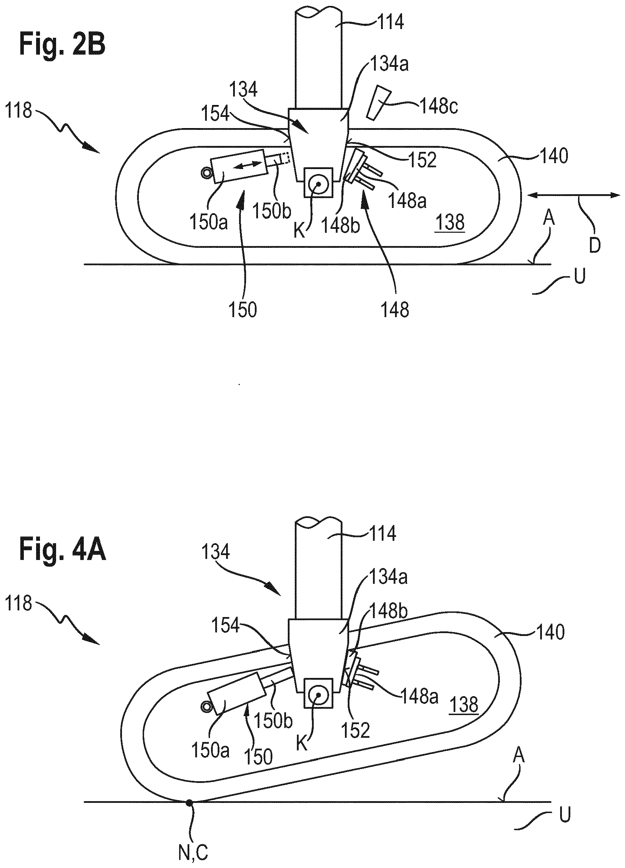

In Figur 2b ist eine alternative Ausführungsform von Anschlägen - im Vergleich zu jenen von Figur 2a - grobschematisch in der Seitenansicht dargestellt. Gleiche und funktionsgleiche Bauteile wie in Figur 2a sind in Figur 2b mit gleichen Bezugszeichen versehen, jedoch erhöht um die Zahl 100. Die Ausführungsform von Figur 2b wird im Nachfolgenden nur insofern erläutert werden, als sie sich von jener der Figur 2a unterscheidet. Ansonsten wird auch zur Erläuterung der Ausführungsform von Figur 2b auf die Ausführungen zu Figur 2a hingewiesen.

Der vordere Anschlag 148 ist in Figur 2b ausgebildet als Anschlagträger 148a, an welchem ein Anschlagbauteil 148b lösbar und austauschbar angeordnet ist. Das Anschlagbauteil 148b kann an dem Anschlagträger 148a angeschraubt oder beispielsweise mittels eines Vorsprung- und Nutsystems bajonettartig aufgesteckt sein. Da das Anschlagbauteil 148b lediglich den Anlageeingriff mit der Flankenfläche 152 sicherstellen muss, reicht es aus, sicherzustellen, dass das Anschlagbauteil 148b unter den im Anlageeingriff einwirkenden Kräften am Anschlagträger 148a verbleibt.

Zur Veränderung des maximal zwischen der Hubsäule 114 und dem Laufwerk 118 erzielbaren Kippwinkels kann an der erfindungsgemäßen Bodenbearbeitungsmaschine wenigstens ein weiteres Anschlagbauteil 148c mitgeführt sein, welches sich abmessungsmäßig vom erstgenannten Anschlagbauteil 148b unterscheidet. Im vorliegenden Beispiel sind die Anschlagbauteile 148b und 148c Keilbauteile mit unterschiedlichen Keilwinkeln und unterschiedlichem Abstand zwischen den den Keilwinkel zwischen sich einschließenden Keilflächen.

Zur Erläuterung einer weiteren alternativen Ausgestaltungsmöglichkeit der mechanischen Anschläge ist der hintere Anschlag 150 als hydraulische Kolben-Zylinder-Anordnung ausgebildet mit einem an der Aufnahmestruktur 138 vorgesehenen Hydraulikzylinder 150a und einer in Kolbenstangenlängsrichtung aus dem Zylinder 150a ausschiebbaren und in diesen einziehbaren Kolbenstange 150b. Die Kolbenstange 150b ist mit durchgezogener Linie in einer tiefer in den Zylinder 150a eingezogenen Stellung und ist strichliniert in einer weiter ausgeschobenen Stellung gezeigt. Die vom Zylinder 150a weg weisende Stirnfläche der Kolbenstange 150b bildet eine mechanische Anschlagfläche, welche zum Anlageeingriff mit der Flankenfläche 154 ausgebildet ist. Durch Verlagerung der Kolbenstange 150b relativ zum Zylinder 150a und durch anschließendes Absperren der Hydraulikleitung kann die Position der Kolbenstange 150b und ihrer zur Flankenfläche 154 hin weisenden Stirnfläche in unterschiedlichen Positionen festgelegt werden, sodass ein ortsveränderlicher mechanischer Anschlag 150 realisiert ist.

Üblicherweise wird an einem Laufwerk 118 nur eine Bauart von mechanischen Anschlägen realisiert sein, sodass üblicherweise der vordere und der hintere mechanische Anschlag entweder mit Austauschbauteilen oder mit einer hydraulisch betätigbaren Kolben-Zylinder-Anordnung realisiert sein werden.

Es sind weitere Bauarten von ortsveränderlichen mechanischen Anschlägen denkbar, beispielsweise mittels eines Spindeltriebs. Ebenso ist denkbar, dass der vordere und der hintere mechanische Anschlag derart durch ein Getriebe oder Gestänge mit nur einem Aktuator verbunden sind, sodass beide Anschläge gemeinsam durch den einen Aktuator verstellbar sind. Die Verstellbarkeit der Anschläge ist dann gegensinnig aufeinander zu oder voneinander weg.

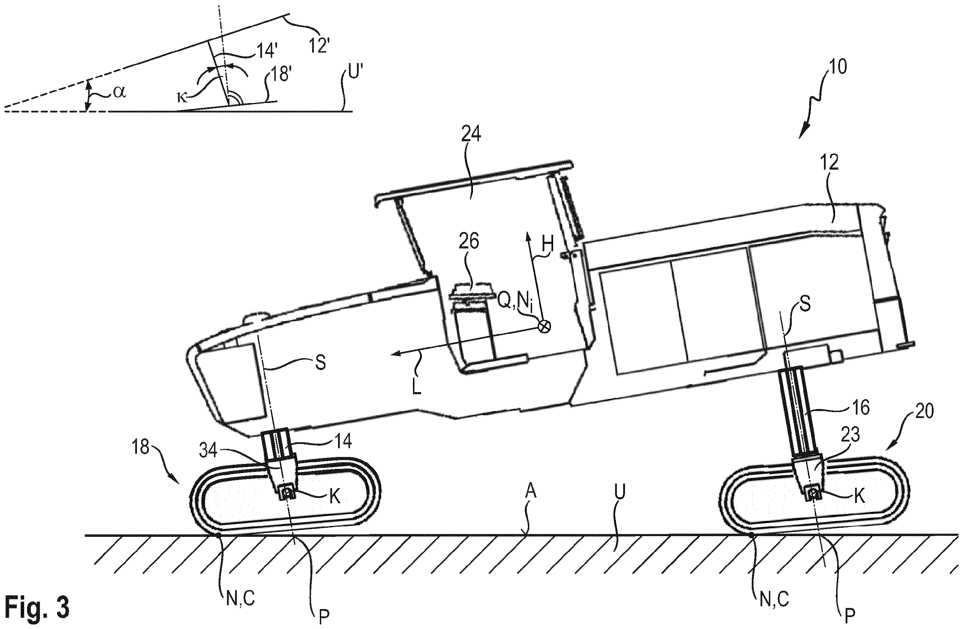

In Figur 3 ist die Bodenbearbeitungsmaschine 10 ohne Arbeitseinrichtung 28 nach einem Neigeschritt dargestellt, bei welchem die Laufwerke 18 und 20 relativ zum Untergrund U um jeweilige zur Zeichenebene von Figur 3 orthogonale Neigeachsen N geneigt sind. Die Neigung der Laufwerke 18 und 20 relativ zur Aufstandsoberfläche A des Untergrunds U ist in Figur 3 übertrieben dargestellt. Die Neigung selbst ist bewirkt durch Erzeugen einer Nickbewegung des Maschinenrahmens 12 um eine in Maschinenrahmenquerrichtung verlaufende Nickachse Ni. Diese Nickbewegung wird wiederum erzeugt durch Einstellen unterschiedlicher relativer Höhenlagen des Maschinenrahmens 12 bezüglich der vorderen Laufwerke 18 einerseits und der hinteren Laufwerke 20 andererseits. Somit wird der Maschinenrahmen 12 relativ zum Untergrund U um einen Nickwinkel α angestellt, wobei der Nickwinkel α betragsmäßig größer ist als der maximal erreichbare Kippwinkel κ zwischen Maschinenrahmen 12 und Laufwerk 18. Daher endet eine Kippbewegung von Maschinenrahmen 12 und Fahrwerk 18 während einer Nickbewegung dann, wenn der maximale Kippwinkel κ erreicht ist, sodass bei fortgesetzter Nickbewegung des Maschinenrahmens 12 zur weiteren Vergrößerung des Nickwinkels α die einzig mögliche weitere Relativbewegung eine Neigebewegung des Laufwerks 18 relativ zum Untergrund U um die Neigeachse N ist.

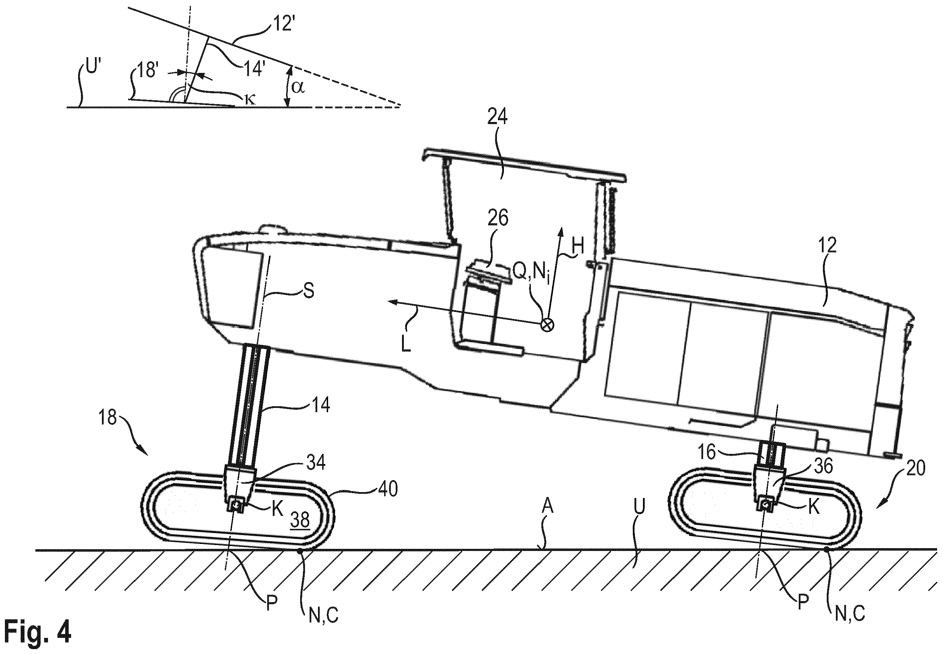

In Figur 4 ist die Situation der Bodenbearbeitungsmaschine 10 nach einem Gegenneigen dargestellt, bei welchem wiederum die Laufwerke 18 und 20 relativ zum Untergrund U geneigt sind, jedoch im Vergleich zu der Stellung von Figur 3 mit entgegengesetztem Neigesinn. Dementsprechend ist auch der Maschinenrahmen 12 mit entgegengesetztem Nicksinn relativ zu der in Figur 1 gezeigten Normalstellung verlagert.

Die Figuren 3 und 4 zeigen ein gleichsinniges Neigen bzw. Gegenneigen der vorderen Laufwerke 18 und der hinteren Laufwerke 20.

Werden die Laufwerke 18 und 20 in der geneigten oder gegengeneigten Stellung der Figuren 3 bzw. 4 relativ zum Maschinenrahmen 12 um ihre jeweilige Lenkachse S gedreht, drehen sie um einen relativ zum Durchstoßpunkt P der jeweiligen Lenkachse verlagerten Schwenkpunkt C, wohingegen in der in Figur 1 gezeigten ungeneigten Stellung einer herkömmlichen Abroll-Fahrsituation der Maschine 10 der Schwenkpunkt C der Fahrwerke 18 und 20 relativ zum Untergrund U mit dem Durchstoßpunkt P der Lenkachse S des jeweiligen Laufwerks 18 bzw. 20 im Wesentlichen zusammenfällt.

In Figur 4a ist eine alternative Möglichkeit dargestellt, wie ein Laufwerk relativ zum Untergrund geneigt werden kann. Dies kann über einen gesondert vorgesehenen Neigeaktuator geschehen.

Im vorliegend dargestellten Beispiel wird die hydraulisch betätigbare Kolben-Zylinder-Anordnung 150, die auch zur Bereitstellung eines ortsveränderlichen mechanischen Anschlags dienen kann, als Neigeaktuator verwendet. Hierzu wird die Kolbenstange 150b gegen die Flankenfläche 154 der Kopplungsstruktur 134 gedrückt und dann weiter ausgefahren, sodass zum einen ein Kippmoment des Laufwerks 118 um die Kippachse K relativ zur Kopplungsstruktur 134 und zum anderen ein Neigemoment um die Neigeachse N relativ zur Aufstandsfläche A bewirkt wird.

Es sei ausdrücklich darauf hingewiesen, dass die Darstellung von Figur 4a lediglich grobschematisch der prinzipiellen Erläuterung der Funktion eines gesondert vorgesehenen Neigeaktuators dient und nicht tatsächliche Abmessungen oder Abmessungsverhältnisse wiedergibt. Dies gilt insbesondere für den Lastarm, mit welchem die Anlagekraft der Kolbenstange 150b im Anlageeingriff an die Flankenfläche 154 ein in Figur 4a im Gegenuhrzeigersinn um die Kippachse K wirkendes Kippmoment bewirkt.

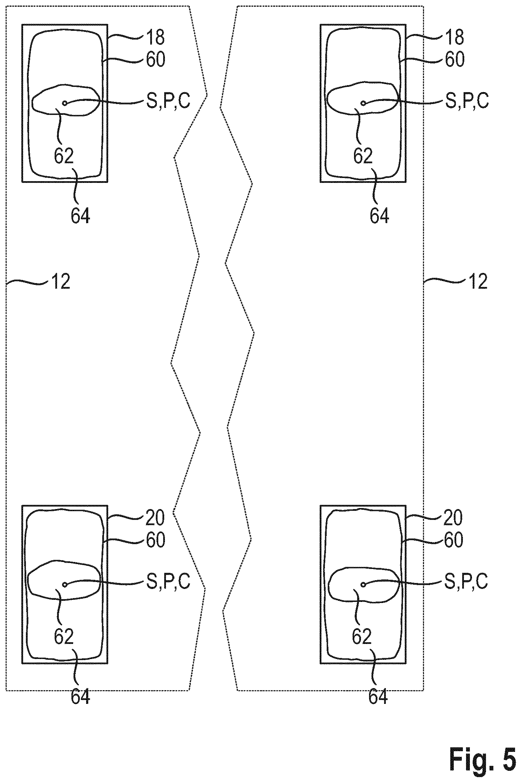

In den nachfolgenden Figuren 5 bis 10 soll die Seitwärtsbewegung der Bodenbearbeitungsmaschine 10 grobschematisch erläutert werden.

Die Zeichenebenen der Figuren 5 bis 10 sind jeweils parallel zur Aufstandsoberfläche A gemäß Figuren 1, 3 und 4. Grobschematisch ist der rechteckige Umriss des Maschinenrahmens 12 strichliniert dargestellt. Weiterhin sind die Umrisse der vorderen Laufwerke 18 und der hinteren Laufwerke 20 als Rechtecke dargestellt.

Figur 5 gibt die Aufstandssituation der Bodenbearbeitungsmaschine 10 von Figur 1 grobschematisch wieder.

Die Gewichtskraft der Maschine 10 wird über die vorderen Laufwerke 18 und die hinteren Laufwerke 20 in den Untergrund U eingeleitet. Die Laufwerke 18 und 20 übertragen dabei den jeweils auf sie entfallenden Aufstandskraftanteil in einem Aufstandsfleck 60. Die Aufstandsflecke 60 der einzelnen Laufwerke 18 und 20 sind den Figuren 5 bis 10 lediglich der Erläuterung halber dargestellt. Sie können in der Realität erheblich von der Darstellung der Figuren 5 bis 10 abweichen, was jedoch für die grundsätzliche Erläuterung des Seitwärtsbewegungsvorgangs keine Bedeutung hat.

Die üblicherweise bei der Stellung der Bodenbearbeitungsmaschine 10 mit parallel zur Aufstandsoberfläche orientiertem Maschinenrahmen 12 orthogonal zum Untergrund U orientierten Lenkachsen S durchstoßen, verlängert gedacht, den Untergrund U im Durchstoßpunkt P etwa in der Mitte der rechteckigen Umrissfläche der Laufwerke 18 und 20.

Da die Aufstandsflecke 60 auch verformungsbedingt gebildet sind, nimmt bei etwa mittiger Krafteinleitung der Gewichtskraft in den Untergrund U die Verformung der Laufkette 40 mit zunehmender Entfernung von der Mitte der Einhüllenden der Fahrwerke 18 und 20 ab. Im Bereich der Laufwerksmitte besteht daher eine Hauptlastzone 62, mit einer hohen mittleren Flächenlast, die umgeben sein kann von einer Nebenlastzone 64, in der zwar die Laufwerke 18 und 20 immer noch mit nennenswerter Flächenlast auf dem Untergrund aufstehen, deren Flächenlast im Mittelwert jedoch erheblich geringer ist als jene der Hauptlastzone 62.

Wird ein Laufwerk 18 oder 20 in der in Figur 5 dargestellten Aufstandssituation in einer für den normalem Abroll-Fahrbetrieb geeigneten Stellung gelenkt, wird ein für das Lenken der Laufwerke 18 und 20 notwendiger Schlupf sich zuerst in der niedrigeren belasteten Nebenlastzone 64 einstellen und erst zuletzt in der höher belasteten und damit auch eine höhere Reibkraft bereitstellenden Hauptlastzone 62. Der Schwenkpunkt C, um welchen das Laufwerk 18 oder 20 relativ zum Untergrund dreht, liegt damit idealerweise im Durchstoßpunkt P der verlängert gedachten Lenkachse S des jeweiligen Laufwerks 18 und 20 oder weicht von diesem nur in vernachlässigbarem Ausmaß ab.

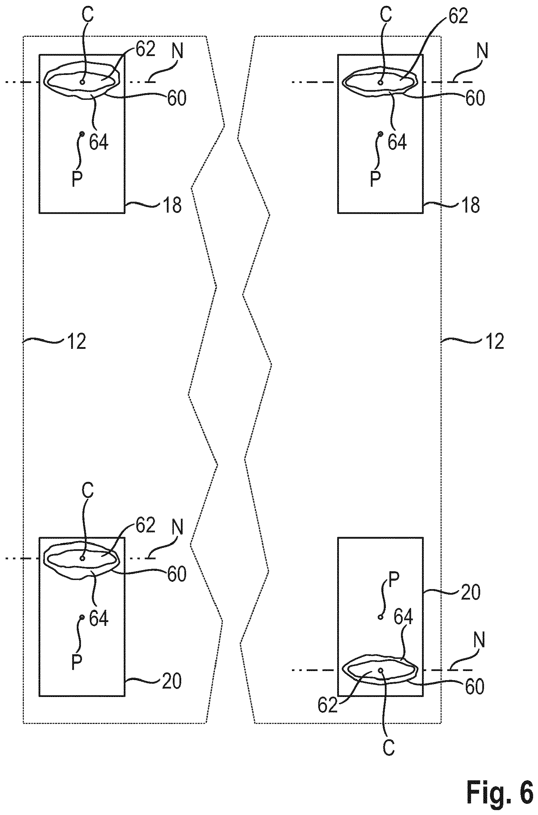

In Figur 6 ist zur Verkürzung der Darstellung in der linken Figurenhälfte die Aufstandssituation der Fahrwerke 18 und 20 bei gleichsinnigem Neigen gezeigt, wie sie in etwa grobschematisch der Aufstandssituation der Bodenbearbeitungsmaschine 10 von Figur 3 entspricht. Tatsächlich werden in der Realität alle Laufwerke entweder gleichsinnig oder gegensinnig geneigt.

Im Vergleich dazu ist auf der rechten Figurenhälfte von Figur 6 die Situation bei gegensinnigem Neigen von vorderem Laufwerk 18 und von hinterem Laufwerk 20 dargestellt. Alternativ hierzu kann das gegensinnige Neigen auch derart erfolgen, dass die Aufstandsflecke 60 zunächst aufeinander zu statt, wie in Figur 6 dargestellt, voneinander weg verlagert werden.

Ein gleichzeitiges gegensinniges Neigen kann nur erfolgen, wenn die vorderen und hinteren Laufwerke 18 bzw. 20 gesonderte Neigeaktuatoren aufweisen, welche unabhängig von der Nickbewegung des Maschinenrahmens ein Neigen der Laufwerke 18 und 20 relativ zum Untergrund U bewirken können. Wird dagegen ein gegensinniges Neigen bzw. Gegenneigen durch eine Nickbewegung des Maschinenrahmens bewirkt, wie dies mit den Figuren 1, 3 und 4 veranschaulicht ist, kann das Neigen der vorderen und der hinteren Laufwerke 18 bzw. 20 nur mit zeitlichem Versatz erfolgen.

Durch das Neigen - sei es nun gleichsinnig oder gegensinnig - wird wenigstens die Hauptlastzone 62 vom Durchstoßpunkt P weg verlagert, sodass auch der Schwenkpunkt C, um welchen das jeweilige Laufwerk 18 bzw. 20 relativ zum Untergrund U schwenkt, vom Durchstoßpunkt P der Lenkachse weg verlagert wird, in der Regel in einer Verlagerungsrichtung orthogonal zur jeweiligen Neigeachse N. Tatsächlich erfährt auch der Durchstoßpunkt P aufgrund der Neigung der Lenkachse eine gewisse Verlagerung, die jedoch für die nachfolgende erläuternde Betrachtung vernachlässigt werden soll, weil sie um Größenordnungen kleiner ist als die Verlagerung des Schwenkpunktes C weg vom Durchstoßpunkt P.

Auffallend ist, dass die relativen Abstände der Schwenkpunkte C der einzelnen Laufwerke 18 und 20 beim gleichsinnigen Neigen gleich bleiben, während sie beim gegensinnigen Neigen erheblichen Änderungen unterliegen.

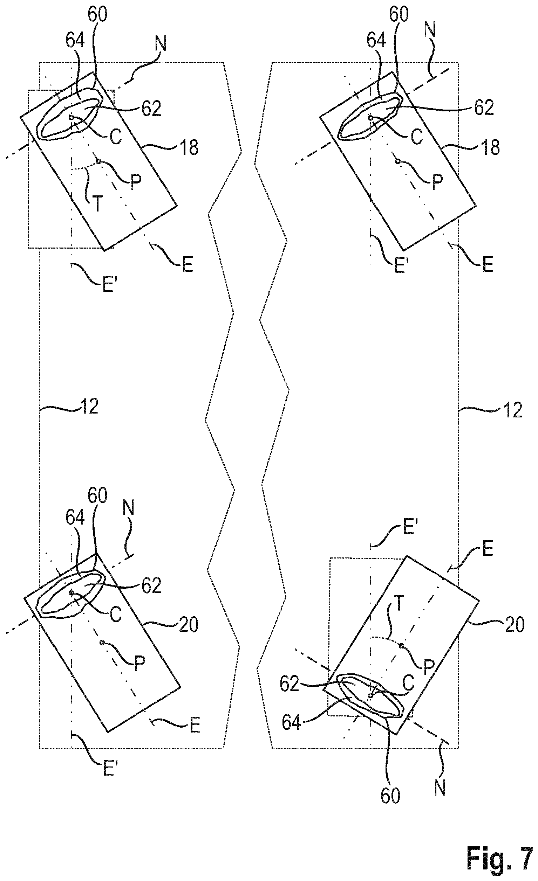

Bauartbedingt können die Laufwerke 18 und 20 relativ zum Maschinenrahmen 12 nur um ihre jeweilige Lenkachse S drehen. Durch den Abstand des Schwenkpunktes C des Laufwerks 18 bzw. 20 vom Durchstoßpunkt P der Lenkachse kommt es dann, wenn das Laufwerk 18 bzw. 20 relativ zum Maschinenrahmen 12 gedreht wird, etwa durch Ausüben eines Lenkmoments, zu einer Schwenkbewegung der Lenkachse S um den jeweiligen tatsächlichen Schwenkpunkt C relativ zum Untergrund. Da die Lenkachse S eines Laufwerks während eines Lenkvorgangs im Wesentlichen maschinenrahmenfest ist, schwenkt mit der Lenkachse S auch der Maschinenrahmen 12 im Bereich des jeweiligen Laufwerks 18 bzw. 20 um dessen Schwenkpunkt C (siehe Figur 7).

Für die Laufwerke 18 und 20 ist in Figur 7 die jeweilige zur Zeichenebene der Figur 7 orthogonale Abrollebene E einmal in der Ausgangsstellung und einmal nach einem Drehen gezeigt. Die Abrollebene E in der Ausgangsstellung ist mit Apostroph gekennzeichnet, die Abrollebene E der jeweils aktuellen Laufwerkstellung ist nur mit dem Großbuchstaben E gekennzeichnet.

Erkennbar ist die Verlagerung des Durchstoßpunktes P und mit diesem der jeweiligen Lenkachse S und damit wiederum des Maschinenrahmens 12 entlang der Teilkreistrajektorie T um den Schwenkpunkt C.

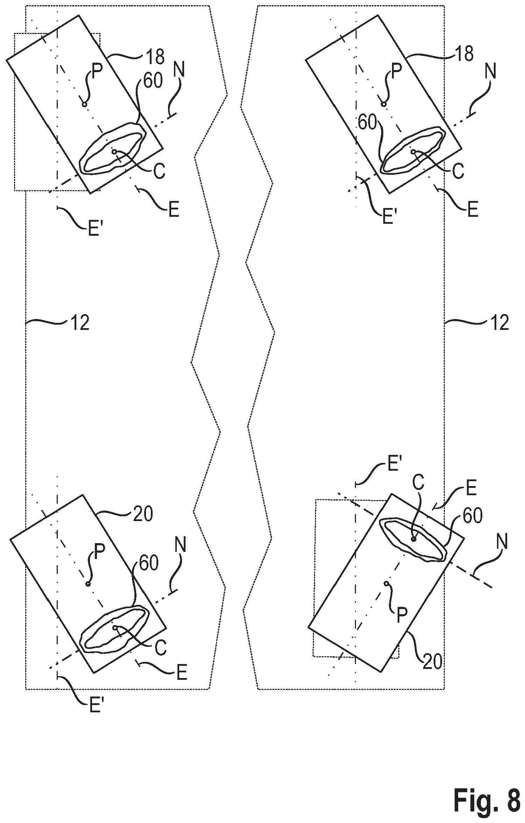

Am linken vorderen Laufrad 18 und am rechten hinteren Laufrad 20 ist die ursprüngliche Laufradstellung strichliniert angezeigt, um die jeweils erreichte Verlagerung zu verdeutlichen. Figur 8 zeigt die Aufstandssituation von Figur 7 nach einem Gegenneigen, wobei wiederum die beiden linken Laufwerke 18 und 20 gleichsinnig gegengeneigt wurden. Die beiden rechten Laufwerke 18 und 20 in Figur 8 wurden gegensinnig gegengeneigt.

Der Aufstandsfleck 60 der jeweiligen Laufwerke 18 und 20 liegt nun nach dem Gegenneigen auf der anderen Seite des Durchstoßpunktes P, sodass der Schwenkpunkt C eines jeden Laufwerks 18 bzw. 20 wiederum mit Abstand vom Durchstoßpunkt P entfernt gelegen ist. Die Lastzonen der jeweiligen Aufstandsflecke 60 sind der Übersichtlichkeit halber nicht mehr bezeichnet.

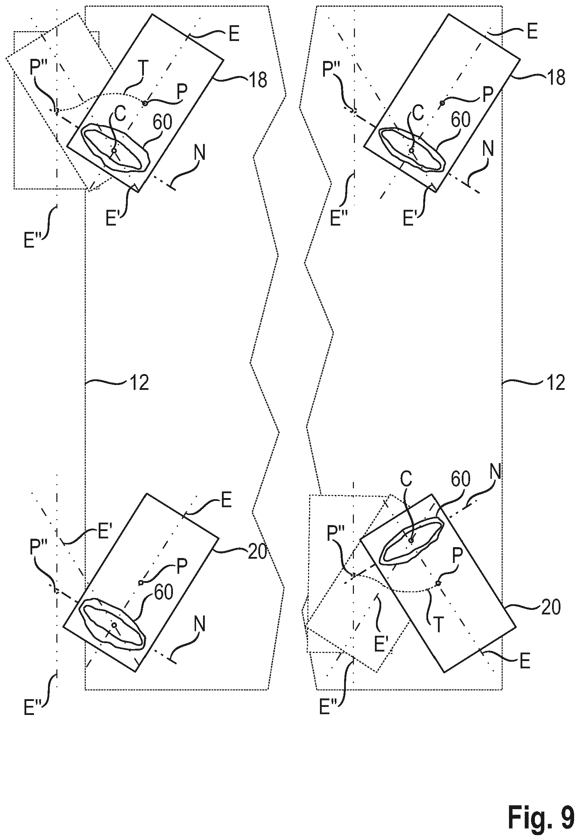

In Figur 9 ist die Aufstandssituation nach einem Gegendrehen ausgehend von der Aufstandssituation von Figur 8 gezeigt. Die aktuelle Abrollebene ist wieder nur mit dem Großbuchstaben E bezeichnet, die unmittelbar vorhergehende Abrollebene mit E' und die noch weiter zurückliegende Stellung der Abrollebene mit E".

Der Drehwinkel beim Gegendrehen im Übergang von den Aufstandssituationen der Figur 8 zu jenen in Figur 9 ist wie bereits zuvor beim Drehen im Übergang von Figur 6 zu Figur 7 jeweils bevorzugt für die vorderen und die hinteren Laufwerke 18 bzw. 20 gleich groß, um möglichst eine Parallelverschiebung des Maschinenrahmens 12 bezogen auf die Ausgangsstellung zu erreichen.

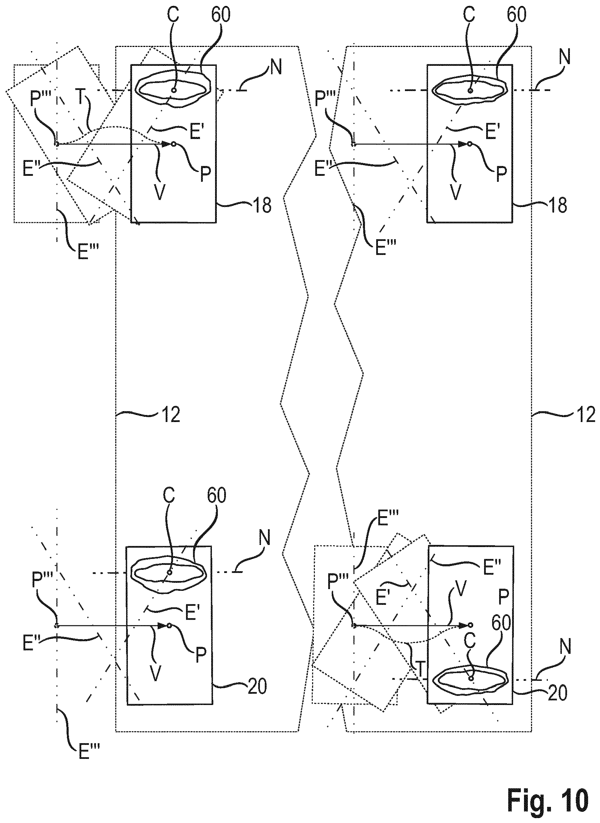

Nach dem Gegenneigen im Übergang von Figur 7 zu Figur 8 erfolgt nun ausgehend von der Aufstandssituation von Figur 9 wieder ein Neigen, gefolgt von einem Drehen. Beispielsweise kann der Drehwinkel beim Übergang der Situation von Figur 9 auf Figur 10 betragsmäßig halb so groß gewählt werden wie beim Gegendrehen in die Aufstandssituation von Figur 9, sodass die Laufwerke 18 bzw. 20 wieder mit Laufrichtung D parallel zur Maschinenrahmenlängsrichtung L ausgerichtet werden.

Das Resultat ist in Figur 10 zu erkennen. Zurückliegende Orientierungen der Abrollebene E sowie der Durchstoßpunkte P werden mit Apostrophen gekennzeichnet, wobei die Anzahl an Apostrophen die Anzahl an zurückliegenden Schritten kennzeichnet. Der Pfeil V zeigt die durch die Neige-, Dreh-, Gegenneige- und Gegendrehschritte erzielte Gesamtverlagerung des Maschinenrahmens 12 in Maschinenrahmenquerrichtung Q an.

Mit dem hier beschriebenen Verfahren - sei es im gleichsinnigen oder gegensinnigen Betrieb - kann eine Bodenbearbeitungsmaschine ohne Umrüstung der Lenkung und ohne weitere Hilfsmittel an einem beliebigen Ort in Maschinenquerrichtung bewegt werden, und zwar ohne dass die Lenkung eine Ausrichtung der lenkbaren Laufwerke 18 und 20 in Maschinenquerrichtung Q ermöglichen muss.

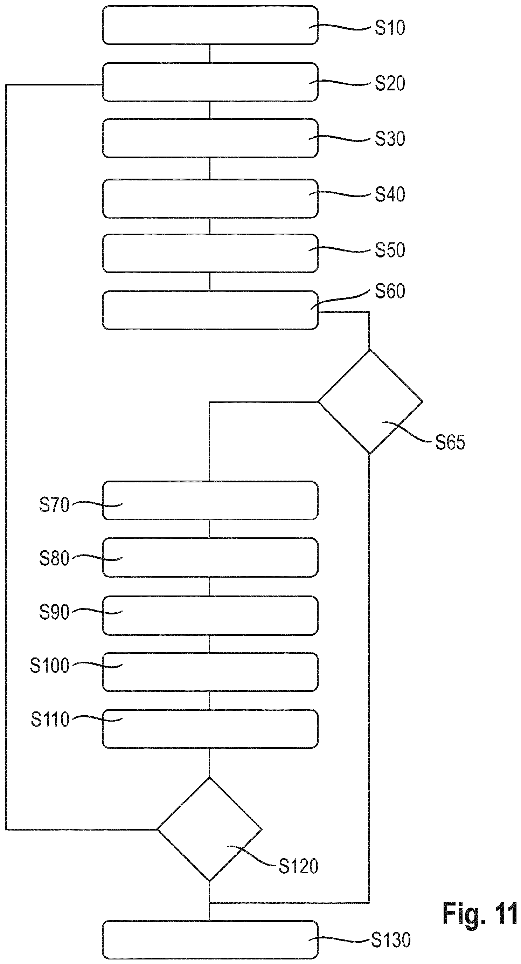

In Figur 11 ist ein Flussdiagramm für eine Ablaufsteuerung eines Bewegungsverfahrens zur Seitwärtsbewegung der Bodenbearbeitungsmaschine 10 mit gleichsinnigen Neige- und Drehbewegungen grobschematisch dargestellt. Auf einen von einem Maschinenführer ausgelösten Startvorgang hin führt die im Steuerpult 26 aufgenommene Steuervorrichtung zunächst im Schritt S10 einen Abruf von Parametern durch, welche für die Seitwärtsbewegung notwendig sind. Die Parameter können ganz oder teilweise aus einem Datenspeicher abgerufen oder/und durch Eingabeaufforderung am Steuerpult 26 vom Maschinenführer abgefragt werden. Die abgefragten Parameter können umfassen: einen Ziel-Neigewinkel der Laufwerke 18 und 20, einen bauartbedingt vorbestimmten oder einstellbaren maximalen Kippwinkel κmax, einen Ziel-Lenkwinkel, welcher bei der Seitwärtsbewegung an den Fahrwerken erreicht werden soll, sowie der gewünschte oder vorbestimmte Seitenverfahrweg, welchen die Bodenbearbeitungsmaschine 10 zurücklegen soll. Sofern der Maschinenführer mit dem Startvorgang nicht bereits die eine von zwei möglichen Seitwärts-Verfahrrichtungen angegeben hat, wird auch diese vom Maschinenführer am Schaltpult 26 abgefragt.

Im nachfolgenden Schritt S20 werden über entsprechende Sensoren ein Ist-Nickwinkel des Maschinenrahmens 12 bezogen auf eine zur Schwerkraftwirkungsrichtung orthogonal ausgerichtete Bezugsebene abgefragt, sowie ein Ist-Kippwinkel zwischen den einzelnen Laufwerken 18 und 20 und der jeweiligen Hubsäule 14 bis 16. Ebenso wird der aktuelle Ist-Lenkwinkel der jeweiligen Laufwerke 18 und 20 sensorisch erfasst. Weiterhin wird die Höhenstellung der Hubsäulen 14 und 16 erfasst. Mit den so erfassten Daten kann ermittelt werden, ob der Untergrund U gegenüber der Horizontalen geneigt ist, und wenn ja, in welche Richtung. Dadurch kann ein relativer Nickwinkel des Maschinenrahmens 12 relativ zum Untergrund U bestimmt werden.

In Schritt S30 ermittelt die Steuervorrichtung ausgehend von den im Schritt S10 abgefragten Parametern und von den im Schritt S20 erfassten Werten einen Unterschiedswert für den Nickwinkel für einen als erstes durchzuführenden Neigevorgang der Fahrwerke, wobei dieser Unterschiedswert des Nickwinkels abhängig vom erfassten Ist-Nickwinkel, vom abgefragten Ziel-Neigewinkel und vom maximalen Kippwinkel zwischen Laufwerken und Hubsäulen errechnet wird. Gegebenenfalls kann auch der Ist-Kippwinkel in die Berechnung miteinbezogen werden, da bei einem von 0° abweichenden Ist-Kippwinkel die Kippwinkelabstände zu den jeweils maximal möglichen Kippwinkeln unterschiedlich groß sind.

In Schritt S40 wird abhängig von dem ermittelten Unterschiedswert für den Nickwinkel ein Verstellweg für die Hubsäulen 14 oder/und 16 berechnet. Der Nickwinkel des Maschinenrahmens wird dabei, wie es in den Figuren 3 und 4 dargestellt ist, durch Höhenverstellung der vorderen Hubsäulen 14 einerseits und der hinteren Hubsäulen 16 andererseits eingestellt.

Teil der Berechnung des Verstellweges ist auch die Prüfung, ob der Verstellweg ausgehend von der erfassten Stellung der Hubsäulen 14 und 16 realisierbar ist, oder ob zunächst die Höhenlage des Maschinenrahmens 12 verändert werden muss, um den Verfahrweg zu realisieren. Alternativ kann die Berechnung auch abhängig von der erfassten Hubsäulenstellung eine Berechnung einer Aufteilung von Verstellwegen auf die vorderen Hubsäulen 14 und die hinteren Hubsäulen 16 umfassen, beispielsweise je nach in einer Verfahrrichtung der Hubsäulen noch verfügbarem Verfahrweg an den vorderen oder/und den hinteren Hubsäulen 14 und 16.

In einem weiter nachfolgenden Schritt S50 werden die Hubsäulen 14 oder/und 16 gemäß dem zuvor berechneten Verstellweg verstellt. Damit wird der Nickwinkel eingestellt, durch welchen der Ziel-Neigewinkel und die damit verbundene Verlagerung des Schwenkpunktes erreicht wird.

Mit dem Abschluss von Schritt S50 ist das Neigen der Laufwerke 18 und 20 abgeschlossen.

Zur Seitwärtsbewegung der Bodenbearbeitungsmaschine 10 wird in einem nachfolgenden Schritt S60 in einem Drehschritt der Lenkwinkel aller Laufwerke zu dem in Schritt S10 abgerufenen Ziel-Lenkwinkel verstellt.

Damit ist der Drehschritt beendet. Ausgehend von der bekannten Bauteilegeometrie der relevanten Bauteile der Maschine 10 wird als Nächstes in Schritt S65 abgefragt, ob die gewünschte Bewegungsstrecke in Seitwärtsrichtung parallel zur Maschinenrahmenquerrichtung Q zurückgelegt wurde oder nicht. Auch die zu dieser Berechnung notwendigen Parameter können in dem ersten Schritt S10 abgefragt werden. Hierfür relevant sind beispielsweise die Geometrie der Laufwerke, um hieraus den Abstand zwischen Schwenkpunkt nach dem Neigen oder Gegenneigen von der Lenkachse zu errechnen, der Ist-Lenkwinkel vor einem Drehen bzw. Gegendrehen und der Ziel-Lenkwinkel.

Ist die gewünschte Seitwärtsstrecke bereits zurückgelegt, werden in einem letzten Verfahrensschritt S130 die Laufwerke geradegestellt, d. h. werden zu einem Ziel-Lenkwinkel von 0° verstellt. Ist die Seitwärtsstrecke noch nicht erreicht, wird das Verfahren entsprechend der folgenden Schritte fortgesetzt.

Mit dem nachfolgenden Schritt S70 beginnt das Gegenneigen. Dies kann in Schritt S70 wiederum die Erfassung aktueller Parameter wie Ist-Nickwinkel, Ist-Kippwinkel, Ist-Lenkwinkel und Stellung der Hubsäulen umfassen. In einem vereinfachten Verfahrensablauf kann dieser Erfassungsschritt S70 auch entfallen und mit den bereits bekannten Parametern weiter gearbeitet werden.

In Schritt S80 wird nun für das Gegenneigen der Unterschiedswert für den Nickwinkel berechnet, analog zu der Berechnung im obigen Schritt S30.

In Schritt S90 wird ausgehend von dem in Schritt S80 berechneten Unterschiedswert für den Nickwinkel der Verstellweg für die Hubsäulen 14 oder/und 16 berechnet.

Im weiter nachfolgenden Schritt S100 werden die Hubsäulen 14 oder/und 16 gemäß dem im Schritt zuvor berechneten Verstellweg verstellt, wodurch der Maschinenrahmen 12 eine Nickbewegung im entgegengesetzten Sinn ausführt, verglichen mit der Nickbewegung des Schrittes S50.

Nach Abschluss des Gegenneigens am Ende des Schrittes S100 wird in einem Schritt S110 der Lenkwinkel aller Laufwerke zum Ziel-Lenkwinkel des Gegendrehens verstellt. Bevorzugt ist der Ziel-Lenkwinkel des Gegendrehens betragsgleich wie der Ziel-Lenkwinkel des Drehens von Schritt S60, hat jedoch ein entgegengesetztes Vorzeichen.

Nach Abschluss des Schrittes S110 ist das Gegendrehen beendet. Daraufhin wird in dem Schritt S65 entsprechender Schritt S120 ausgeführt und ermittelt, ob die gewünschte Bewegungsstrecke in Seitwärtsrichtung zurückgelegt wurde oder nicht.

Ist die gewünschte Seitwärtsstrecke bereits zurückgelegt, werden in einem letzten Verfahrensschritt S130 die Laufwerke geradegestellt, d. h. werden zu einem Ziel-Lenkwinkel von 0° verstellt. Ist die Seitwärtsstrecke noch nicht erreicht, kehrt die Verfahrensausführung zu Schritt S20 zurück und beginnt mit einem erneuten Neigevorgang, gefolgt von einem Drehschritt, Gegenneigeschritt und Gegendrehschritt. Anstelle eines Abrufs eines Ziel-Lenkwinkels in Schritt S10 kann dieser auch aus einem vorgegebenen Seitwärts-Verfahrweg berechnet werden, um möglichst genau die gewünschte Strecke in der angegebenen Seitwärts-Richtung zu verfahren.

Alternativ kann die Durchführung der Schritte S10 - S110 durch den Maschinenbediener lediglich unter Vorgabe der Bewegungsrichtung gestartet werden. Die Verfahrensschritte S10 - S110 werden dann von der Steuervorrichtung durchgeführt bis der Maschinenbediener die Seitwärtsbewegung stoppt. Anschließend kann dann eine automatische Geradestellung der Laufwerke gem. Schritt S130 erfolgen.

Der in Figur 11 beschriebene Verfahrensablauf betrifft ein gleichsinniges Neigen und Gegenneigen, sodass durch entsprechende Höhenverstellung des Maschinenrahmens jeweils alle Laufwerke gleichzeitig geneigt werden können.

## Patentansprüche

1. Verfahren zur Seitwärtsbewegung einer Bodenbearbeitungsmaschine (10), wie etwa Straßenfräse, Recycler oder Surface-Miner, wobei die Bodenbearbeitungsmaschine (10) einen Maschinenrahmen (12) aufweist, welcher über ein Fahrwerk (22) auf einer Aufstandsoberfläche (A) eines Untergrunds (U) aufsteht, wobei das Fahrwerk (22) wenigstens ein vorderes Laufwerk (18) und wenigstens ein hinteres Laufwerk (20) aufweist, welche Laufwerke (18, 20) dazu ausgebildet sind, auf dem Untergrund (U) in einer Laufrichtung (D) abzurollen, wobei das wenigstens eine vordere Laufwerk (18) und das wenigstens eine hintere Laufwerk (20) relativ zum Maschinenrahmen (12) um eine dem jeweiligen Laufwerk (18, 20) zugeordnete Lenkachse (S) drehbar sind, so dass die Laufrichtung (D) des jeweiligen Laufwerks (18, 20) mit der Maschinenrahmenlängsrichtung (L) einen veränderbaren Lenkwinkel einschließt, **dadurch gekennzeichnet, dass** die verfahrensgemäße Seitwärtsbewegung in einer Seitwärtsrichtung (V) erfolgt, welche von der durch die jeweiligen Lenkwinkel bestimmten Fahrtrichtung der Bodenbearbeitungsmaschine (10) abweicht, wobei das Verfahren folgende Schritte umfasst:
- Neigen des wenigstens einen lenkbaren vorderen Laufwerks (18) relativ zur Aufstandsoberfläche (A) um eine sowohl mit der zugeordneten Lenkachse (S) als auch mit der Laufrichtung (D) des Laufwerks (18) einen Winkel, vorzugsweise einen rechten Winkel, einschließende vordere Neigeachse (N) in einem ersten Neigesinn derart, dass ein Schwenkpunkt (C), um den das geneigte Laufwerk (18) bei Ausübung eines Lenkmoments um die Lenkachse (S) relativ zum Untergrund (U) schwenkt, von einem virtuellen Durchstoßpunkt (P), in welchem die zum Untergrund (U) hin verlängert gedachte Lenkachse (S) die Aufstandsoberfläche (A) durchstößt, weg verlagert wird,
- Drehen des geneigten wenigstens einen vorderen Laufwerks (18) relativ zum Maschinenrahmen (12) um die Lenkachse (S) in einem ersten Drehsinn und dadurch Schwenken des geneigten wenigstens einen vorderen Laufwerks (18) relativ zum Untergrund (U) um den vom Durchstoßpunkt (P) weg verlagerten Schwenkpunkt (C),
- Neigen des wenigstens einen lenkbaren hinteren Laufwerks (20) relativ zur Aufstandsoberfläche (A) um eine sowohl mit der zugeordneten Lenkachse (S) als auch mit der Laufrichtung (D) des Laufwerks (20) einen Winkel, vorzugsweise einen rechten Winkel, einschließende hintere Neigeachse (N) in einem zweiten Neigesinn derart, dass ein Schwenkpunkt (C), um den das geneigte Laufwerk (20) bei Ausübung eines Lenkmoments um die Lenkachse (S) relativ zum Untergrund (U) schwenkt, von einem virtuellen Durchstoßpunkt (P), in welchem die zum Untergrund (U) hin verlängert gedachte Lenkachse (S) die Aufstandsoberfläche (A) durchstößt, weg verlagert wird,
- Drehen des geneigten wenigstens einen hinteren Laufwerks (20) relativ zum Maschinenrahmen (12) um die Lenkachse (S) in einem zweiten Drehsinn und dadurch Schwenken des geneigten wenigstens einen hinteren Laufwerks (20) relativ zum Untergrund (U) um den vom Durchstoßpunkt (P) weg verlagerten Schwenkpunkt (C).

2. Verfahren nach Anspruch 1,
**dadurch gekennzeichnet, dass** das Verfahren folgende weitere Schritte umfasst:
- Gegenneigen des wenigstens einen vorderen Laufwerks (18) relativ zur Aufstandsoberfläche (A) um die Neigeachse (N) in einem dem ersten Neigesinn entgegengesetzten Neigesinn und dadurch Verlagern des Schwenkpunktes (C) zu einem vom Durchstoßpunkt (P) entfernt gelegenen Ort derart, dass der Durchstoßpunkt (P) am Ende des Gegenneigens zwischen dem aktuellen Schwenkpunkt (C) und dem Ort des Schwenkpunktes (C) nach dem letzten Schwenken gelegen ist,
- Gegendrehen des gegengeneigten wenigstens einen vorderen Laufwerks (18) relativ zum Maschinenrahmen (12) um die Lenkachse (S) in einem dem ersten Drehsinn entgegengesetzten Drehsinn und dadurch Gegenschwenken des gegengeneigten wenigstens einen vorderen Laufwerks (18) relativ zum Untergrund (U) um den vom Durchstoßpunkt (P) weg verlagerten Schwenkpunkt (C),
- Gegenneigen des wenigstens einen hinteren Laufwerks (20) relativ zur Aufstandsoberfläche (A) um die Neigeachse (N) in einem dem zweiten Neigesinn entgegengesetzten Neigesinn und dadurch Verlagern des Schwenkpunktes (C) zu einem vom Durchstoßpunkt (P) entfernt gelegenen Ort derart, dass der Durchstoßpunkt (P) am Ende des Gegenneigens zwischen dem aktuellen Schwenkpunkt (C) und dem Ort des Schwenkpunktes (C) nach dem letzten Schwenken gelegen ist,
- Gegendrehen des gegengeneigten wenigstens einen hinteren Laufwerks (20) relativ zum Maschinenrahmen (12) um die Lenkachse (S) in einem dem zweiten Drehsinn entgegengesetzten Drehsinn und dadurch Gegenschwenken des gegengeneigten wenigstens einen hinteren Laufwerks (20) relativ zum Untergrund (U) um den vom Durchstoßpunkt (P) weg verlagerten Schwenkpunkt (C).

3. Verfahren nach Anspruch 2,
**dadurch gekennzeichnet, dass** die Schritte des Neigens und Drehens gemäß Anspruch 1 einerseits und des Gegenneigens und Gegendrehens gemäß Anspruch 2 andererseits iterativ alternierend ausgeführt werden.

4. Verfahren nach einem der vorhergehenden Ansprüche,
**dadurch gekennzeichnet, dass** sowohl der erste und der zweite Neigesinn als auch der erste und der zweite Drehsinn jeweils gleichsinnig sind oder dass sowohl der erste und der zweite Neigesinn als auch der erste und der zweite Drehsinn jeweils gegensinnig sind.

5. Verfahren nach einem der vorhergehenden Ansprüche,
**dadurch gekennzeichnet, dass** der Maschinenrahmen (12) mit dem wenigstens einen vorderen Laufwerk (18) oder/und mit dem wenigstens einen hinteren Laufwerk (20) über ein Hubwerk (14, 16) derart verbunden ist, dass der Maschinenrahmen (12) um eine zur Maschinerahmenlängsrichtung (L) orthogonale aufstandsoberflächenparallele Nickachse (Ni) mit veränderlichem Nickwinkel (a) orientierbar ist, wobei das Neigen oder/und das Gegenneigen der lenkbaren Laufwerke (18, 20) relativ zum Untergrund (U) durch Verändern des Nickwinkels (α) des Maschinenrahmens (12) bewirkt wird.

6. Bodenbearbeitungsmaschine (10), wie etwa Straßenfräse, Recycler oder Surface-Miner, wobei die Bodenbearbeitungsmaschine (10) einen Maschinenrahmen (12) aufweist, welcher über ein Fahrwerk (22) auf einer Aufstandsoberfläche (A) eines Untergrunds (U) aufsteht, wobei das Fahrwerk (22) wenigstens ein vorderes Laufwerk (18) und wenigstens ein hinteres Laufwerk (20) aufweist, welche Laufwerke (18, 20) dazu ausgebildet sind, auf dem Untergrund (U) in einer Laufrichtung (D) abzurollen, wobei das wenigstens eine vordere Laufwerk (18) und das wenigstens eine hintere Laufwerk (20) relativ zum Maschinenrahmen (12) um eine dem jeweiligen Laufwerk (18, 20) zugeordnete Lenkachse (S) drehbar sind, so dass die Laufrichtung (D) des jeweiligen Laufwerks (18, 20) mit der Maschinenrahmenlängsrichtung (L) einen veränderbaren Lenkwinkel einschließt,
**dadurch gekennzeichnet, dass** die Bodenbearbeitungsmaschine (10) eine Neigevorrichtung aufweist, durch welche das wenigstens eine lenkbare vordere Laufwerk (18) relativ zur Aufstandsoberfläche (A) um eine sowohl mit der zugeordneten Lenkachse (S) als auch mit der Laufrichtung (D) des Laufwerks (18) einen Winkel, vorzugsweise einen rechten Winkel, einschließenden vordere Neigeachse (N) neigbar ist, und durch welche das wenigstens eine lenkbare hintere Laufwerk (20) um eine sowohl mit der zugeordneten Lenkachse (S) als auch mit der Laufrichtung (D) des Laufwerks (20) einen Winkel, vorzugsweise einen rechten Winkel, einschließenden hinteren Neigeachse (N) neigbar ist.

7. Bodenbearbeitungsmaschine (10) nach Anspruch 6,
**dadurch gekennzeichnet, dass** die Neigevorrichtung einen Neigeaktuator umfasst, etwa eine hydraulische Kolben-Zylinderanordnung oder einen elektromotorischen Spindeltrieb, durch welchen das wenigstens eine lenkbare vordere Laufwerk (18) oder/und das wenigstens eine lenkbare hintere Laufwerk (20) um die vordere bzw. hintere Neigeachse (N) relativ zur Aufstandsoberfläche (A) neigbar ist bzw. sind.

8. Bodenbearbeitungsmaschine (10) nach Anspruch 6 oder 7,
**dadurch gekennzeichnet, dass** der Maschinenrahmen (12) mit dem wenigstens einen vorderen Laufwerk (18) oder/und mit dem wenigstens einen hinteren Laufwerk (20) über ein Hubwerk (14, 16) derart verbunden ist, dass der Maschinenrahmen (12) relativ zur Aufstandsoberfläche (A) um eine zur Maschinenrahmenlängsrichtung (L) orthogonale aufstandsoberflächenparallele Nickachse (Ni) mit veränderlichem Nickwinkel (α) orientierbar ist, wobei die Neigevorrichtung das Hubwerk (14, 16) und eine Kippbegrenzungsvorrichtung (48, 50, 52, 54) umfasst, welche einen Kippwinkel (κ) um eine zur Neigeachse (N) parallele Kippachse (K) zwischen Maschinenrahmen (12) und wenigstens einem neigbaren Laufwerk (18, 20) auf einen Wert begrenzt, der betragsmäßig kleiner ist als der maximal erreichbare Nickwinkel (α) zwischen Maschinenrahmen (12) und Aufstandsoberfläche (A).

9. Bodenbearbeitungsmaschine (10) nach Anspruch 8,
**dadurch gekennzeichnet, dass** die Kippbegrenzungsvorrichtung (48, 50, 52, 54) an dem wenigstens einem neigbaren Laufwerk (18, 20) einen mechanischen Anschlag (48, 50) umfasst, welcher durch Veränderung des Nickwinkels (α) des Maschinenrahmens (12) in einen eine Relativverkippung von Maschinenrahmen (12) und Laufwerk (18, 20) um die Kippachse (K) begrenzenden Anlageeingriff mit einem mechanischen Gegenanschlag (52, 54) eines gemeinsam mit dem Maschinenrahmen (12) um die Nickachse (Ni) rotierbaren Bauteils (34, 36) oder Bauteilabschnitts bringbar ist.

10. Bodenbearbeitungsmaschine (10) nach Anspruch 9,
**dadurch gekennzeichnet, dass** der mechanische Anschlag (48, 50) oder/und der mechanische Gegenanschlag (52, 54) zur Veränderung des maximal möglichen Kippwinkels (κ) zwischen Maschinenrahmen (12) und Laufwerk (18, 20) an dem ihn tragenden Maschinenteil (38) ortsveränderlich vorgesehen ist.

11. Bodenbearbeitungsmaschine (10) nach Anspruch 9 oder 10,
**dadurch gekennzeichnet, dass** das Hubwerk (14, 16) eine mit dem wenigstens einen neigbaren Laufwerk (18, 20) um die Kippachse (K) kippbar gekoppelte höhenveränderliche Hubsäule (14, 16) umfasst, wobei der mechanische Anschlag (48, 50) an einer Aufnahmestruktur (38) des Laufwerks (18, 20) vorgesehen ist, an welcher ein Stützrad, eine Mehrzahl von Stützrädern oder eine Laufkette (40) umlaufbeweglich aufgenommen ist, und wobei der Gegenanschlag (52, 54) an der Hubsäule (14, 16) oder an einer die Hubsäule (14, 16) kippbar mit dem Laufwerk (18, 20) koppelnden Kopplungsstruktur (34, 36) vorgesehen ist.

12. Bodenbearbeitungsmaschine (10) nach einem der Ansprüche 6 bis 11,
**dadurch gekennzeichnet, dass** wenigstens ein Laufwerk (18, 20) ein Stützrad, eine Mehrzahl von Stützrädern oder eine Laufkette (40) umfasst.

13. Bodenbearbeitungsmaschine (10) nach Anspruch 12,
**dadurch gekennzeichnet, dass** das wenigstens eine neigbare Laufwerk (18, 20) auch bei relativ zum Untergrund (U) geneigter Stellung mit einem Stützrad oder mit der Laufkette (40) auf der Aufstandsoberfläche (A) aufsteht.

14. Bodenbearbeitungsmaschine (10) einem der Ansprüche 6 bis 11,
**dadurch gekennzeichnet, dass** wenigstens ein neigbares Laufwerk (18, 20) bei relativ zum Untergrund (U) geneigter Stellung mit einem das Stützrad, die Mehrzahl von Stützrädern oder die Laufkette (40) umlaufbeweglich aufnehmenden Rahmen oder mit einem an dem Rahmen aufgenommenen Stützbauteil auf der Aufstandsoberfläche (A) aufsteht.

15. Bodenbearbeitungsmaschine (10) nach einem der Ansprüche 6 bis 14,
**dadurch gekennzeichnet, dass** sie eine Steuervorrichtung (26) umfasst, welche auf Aktivierung hin zur Ausführung einer Seitwärtsbewegungssteuerung ausgebildet ist, welche eine Seitwärtsbewegung nach einem der Ansprüche 1 bis 5 ausführt.

## Claims

1. A method for sideways movement of an earth working machine (10) such as a road miller, recycler, or surface miner, the earth working machine (10) comprising a machine frame (12) that stands via a propelling unit (22) on a standing surface (A) of a substrate (U), the propelling unit (22) comprising at least one front drive unit (18) and at least one rear drive unit (20), which drive units (18, 20) are configured to roll on the substrate (U) in a running direction (D), the at least one front drive unit (18) and the at least one rear drive unit (20) being rotatable relative to the machine frame (12) around a steering axis (S) associated with the respective drive unit (18, 20) so that the running direction (D) of the respective drive unit (18, 20) encloses a modifiable steering angle with the longitudinal machine frame direction (L),
**characiterized in that** the method-related sideways movement occurs in a sideways direction (V) that deviates from the travel direction of the earth working machine (10) determined by the respective steering angle, the method encompassing the following steps:
- tilting the at least one steerable front drive unit (18) relative to the standing surface (A) in a first tilting direction around a front tilt axis (N) enclosing an angle, preferably a right angle, both with the associated steering axis (S) and with the running direction (D) of the drive unit (18), in such a way that a pivot point (C) around which the tilted drive unit (18) pivots relative to the substrate (U) upon exertion of a steering torque around the steering axis (S) is shifted away from a virtual intersection point (P) at which the steering axis (S), notionally prolonged toward the substrate (U), intersects the standing surface (A),
- rotating the tilted at least one front drive unit (18) relative to the machine frame (12) around the steering axis (S) in a first rotation direction and thereby pivoting the tilted at least one front drive unit (18) relative to the substrate (U) around the pivot point (C) shifted away from the intersection point (P),
- tilting the at least one steerable rear drive unit (20) relative to the standing surface (A) in a second tilting direction around a rear tilt axis (N) enclosing an angle, preferably a right angle, both with the associated steering axis (S) and with the running direction (D) of the drive unit (20), in such a way that a pivot point (C) around which the tilted drive unit (20) pivots relative to the substrate upon exertion of a steering torque around the steering axis (S) is shifted away from a virtual intersection point (P) at which the steering axis (S), notionally prolonged toward the substrate (U), intersects the standing surface (A),
- rotating the tilted at least one rear drive unit (20) relative to the machine frame (12) around the steering axis (S) in a second rotation direction and thereby pivoting the tilted at least one rear drive unit (20) relative to the substrate (U) around the pivot point (C) shifted away from the intersection point (P).

2. The method according to Claim 1,
**characterized in that** the method encompasses the following further steps:
- counter-tilting the at least one front drive unit (18) relative to the standing surface (A) around the tilt axis (N) in a tilting direction opposite to the first tilting direction and thereby shifting the pivot point (C) to a site remote from the intersection point (P), in such a way that upon completion of the counter-tilting, the intersection point (P) is located between the current pivot point (C) and the site of the pivot point (C) after the last pivoting,
- counter-rotating the counter-tilted at least one front drive unit (18) relative to the machine frame (12) around the steering axis (S) in a rotation direction opposite to the first rotation direction and thereby counter-pivoting the counter-tilted at least one front drive unit (18) relative to the substrate (U) around the pivot point (C) shifted away from the intersection point (P),
- counter-tilting the at least one rear drive unit (20) relative to the standing surface (A) around the tilt axis (N) in a tilting direction opposite to the second tilting direction and thereby shifting the pivot point (C) to a site remote from the intersection point (P), in such a way that upon completion of the counter-tilting, the intersection point (P) is located between the current pivot point (C) and the site of the pivot point (C) after the last pivoting,
- counter-rotating the counter-tilted at least one rear drive unit (20) relative to the machine frame (12) around the steering axis (S) in a rotation direction opposite to the second rotation direction and thereby counter-pivoting the counter-tilted at least one rear drive unit (20) relative to the substrate (U) around the pivot point (C) shifted away from the intersection point (P).

3. The method according to Claim 2,
**characterized in that** the steps of tilting and rotation according to Claim 1 on the one hand, and counter-tilting and counter-rotation according to Claim 2 on the other hand, are performed iteratively and alternatingly.

4. The method according to one of the preceding claims,
**characterized in that** both the first and the second tilting direction and the first and the second rotation direction are each co-directional; or both the first and the second tilting direction and the first and the second rotation direction are each counter-directional.

5. The method according to one of the preceding claims,
**characterized in that** the machine frame (12) is connected to the at least one front drive unit (18) and/or to the at least one rear drive unit (20) via a lifting unit (14, 16), in such a way that the machine frame (12) is orientable at a modifiable pitch angle (α) around a pitch axis (Ni) orthogonal to the longitudinal machine frame direction (L) and parallel to the standing surface, the tilting and/or counter-tilting of the steerable drive units (18, 20) relative to the substrate (U) being brought about by modifying the pitch angle (α) of the machine frame (12).

6. An earth working machine (10) such as a road miller, recycler, or surface miner, the earth working machine (10) comprising a machine frame (12) that stands via a propelling unit (22) on a standing surface (A) of a substrate (U), the propelling unit (22) comprising at least one front drive unit (18) and at least one rear drive unit (20), which drive units (18, 20) are configured to roll on the substrate (U) in a running direction (D), the at least one front drive unit (18) and the at least one rear drive unit (20) being rotatable relative to the machine frame (12) around a steering axis (S) associated with the respective drive unit (18, 20) so that the running direction (D) of the respective drive unit (18, 20) encloses a modifiable steering angle with the longitudinal machine frame direction (L),
**characterized in that** the earth working machine (10) comprises a tilting apparatus with which the at least one steerable front drive unit (18) is tiltable relative to the standing surface (A) around a front tilt axis (N) enclosing an angle, preferably a right angle, both with the associated steering axis (S) and with the running direction (D) of the drive unit (18), and with which the at least one steerable rear drive unit (20) is tiltable around a rear tilt axis (N) enclosing an angle, preferably a right angle, both with the associated steering axis (S) and with the running direction (D) of the drive unit (20).

7. The earth working machine (10) according to Claim 6,
**characterized in that** the tilting apparatus encompasses a tilt actuator, for example a hydraulic piston/cylinder arrangement or an electric-motor spindle drive, with which the at least one steerable front drive unit (18) and/or the at least one steerable rear drive unit (20) is/are tiltable respectively around the front or rear tilt axis (N) relative to the standing surface (A).

8. The earth working machine (10) according to Claim 6 or 7,
**characterized in that** the machine frame (12) is connected to the at least one front drive unit (18) and/or to the at least one rear drive unit (20) via a lifting unit (14, 16), in such a way that the machine frame (12) is orientable at a modifiable pitch angle (a) around a pitch axis (Ni) orthogonal to the longitudinal machine frame direction (L) and parallel to the standing surface, the tilting apparatus encompassing the lifting unit (14, 16) and a tipping limitation apparatus (48, 50, 52, 54) that limits a tipping angle (k) around a tipping axis (K) parallel to the tilt axis (N), between the machine frame (12) and at least one tiltable drive unit (18, 20), to a value that is smaller in terms of magnitude than the maximum achievable pitch angle (a) between the machine frame (12) and standing surface (A).

9. The earth working machine (10) according to Claim 8,
**characterized in that** the tipping limitation apparatus (48, 50, 52, 54) on the at least one tiltable drive unit (18, 20) encompasses a mechanical stop (48, 50) that, by modification of the pitch angle (a) of the machine frame (12), can be brought into an abutting engagement, which limits a relative tipping of the machine frame (12) and drive unit (18, 20) around the tipping axis (K), with a mechanical counter-stop (52, 54) of a component (34, 46) or component portion rotatable around the pitch axis (Ni) together with the machine frame (12).

10. The earth working machine (10) according to Claim 9,
**characterized in that** the mechanical stop (48, 50) and/or the mechanical counter-stop (52, 54) is provided in a modifiable location on the machine part (38) that carries it, in order to modify the maximum possible tipping angle (k) between the machine frame (12) and drive unit (18, 20).

11. The earth working machine (10) according to Claim 9 or 10, **characterized in that** the lifting unit (14, 16) encompasses a vertically adjustable lifting column (14, 16) that is coupled tippably around the tipping axis (K) to the at least one tiltable drive unit (18, 20), the mechanical stop (48, 50) being provided on a receiving structure (38) of the drive unit (18, 20) on which a support wheel, a plurality of support wheels, or a drive track (40) is received in circulatingly movable fashion, and the counter-stop (52, 54) being provided on the lifting column (14, 16) or on a coupling structure (34, 36) tippably coupling the lifting column (14, 16) to the drive unit (18, 20).

12. The earth working machine (10) according to one of Claims 6 to 11,
**characterized in that** at least one drive unit (18, 20) encompasses a support wheel, a plurality of support wheels, or a drive track (40).

13. The earth working machine (10) according to Claim 12,
**characterized in that** the at least one tiltable drive unit (18, 20) stands on the standing surface (A) with a support wheel or with the drive track (40), even in a position tilted relative to the substrate (U)

14. The earth working machine (10) according to one of Claims 6 to 11,
**characterized in that** at least one tiltable drive unit (18, 20) stands on the standing surface (A), in the context of a position tilted relative to the substrate (U), with a frame that receives in circulatingly movable fashion the support wheel, the plurality of support wheels, or the drive track (40), or with a support component received on the frame.

15. The earth working machine (10) according to one of Claims 6 to 14,
**characterized in that** it encompasses a control apparatus (26) that is configured to execute, upon activation, a sideways movement control function that executes a sideways movement according to one of Claims 1 to 5.

## Revendications

1. Procédé de déplacement latéral d'une machine de travail du sol (10) comme par exemple une fraiseuse routière, un recycleur ou un surface miner, la machine de travail du sol (10) comprenant un cadre de machine (12) qui repose sur une surface de repos (A) d'un sol (U) via un châssis (22), le châssis (22) comprenant au moins un train de roues avant (18) et au moins un train de roues arrière (20), lesdits trains de roues (18, 20) étant adaptés pour rouler sur le sol (U) dans un sens de déplacement (D), où ledit au moins un train de roues avant (18) et ledit au moins un train de roues arrière (20) peuvent être pivotés par rapport au cadre de machine (12) autour d'un axe de direction (S) associé au train de roues (18, 20) respectif de sorte que le sens de déplacement (D) du train de roues (18, 20) respectif renferme un angle de direction variable avec le sens longitudinal du cadre de machine (L),
**caractérisé en ce que** le déplacement latéral selon le procédé est réalisé dans un sens latéral (V) s'écartant du sens de déplacement de la machine de travail du sol (10) déterminé par les angles de direction, le procédé comprenant les étapes suivantes :
- incliner ledit au moins un train de roues avant (18) dirigeable par rapport à la surface de repos (A) autour d'un axe d'inclinaison avant (N) renfermant un angle, de préférence un angle droit, avec l'axe de direction (S) respectif associé ainsi qu'avec le sens de déplacement (D) du train de roues (18) dans un premier sens d'inclinaison de sorte qu'un point de pivotement (C) autour duquel le train de roues (18) incliné pivote par rapport au sol (U)en réalisant un couple de direction autour de l'axe de direction (S), est éloigné d'un point d'intersection (P) virtuel où l'axe de direction (S) prolongé vers le sol (U) intersecte la surface de repos (A),
- tourner ledit au moins un train de roues avant (18) incliné par rapport au cadre de machine (12) autour de l'axe de direction (S) dans un premier sens de rotation et ainsi pivoter ledit au moins un train de roues avant (18) incliné, par rapport au sol (U) autour du point de pivotement (C) éloigné du point d'intersection (P),
- incliner ledit au moins un train de roues arrière (20) dirigeable par rapport à la surface de repos (A) autour d'un axe d'inclinaison (N) arrière renfermant un angle, de préférence un angle droit, avec l'axe de direction (S) associé et avec le sens de déplacement (D) du train de roues (20) dans un deuxième sens d'inclinaison de sorte qu'un point de pivotement (C), autour duquel le train de roues (20) incliné pivote pendant l'application d'un moment de braquage autour de l'axe de direction (S) par rapport au sol (U), s'éloigne d'un point d'intersection (P) virtuel où l'axe de direction (S) prolongé vers le sol (U) intersecte la surface de repos (A),
- tourner ledit au moins un train de roues arriéré (20) incliné par rapport au cadre de machine (12) autour de l'axe de direction (S) dans un deuxième sens de rotation et ainsi pivoter ledit au moins un train de roues arriéré (20) incliné par rapport au sol (U) autour du point de pivotement (C) éloigné du point d'intersection (P).

2. Procédé selon la revendication 1,
**caractérisé en ce que** le procédé comprend les autres étapes suivantes :
- contre-incliner ledit au moins un train de roues (18) avant par rapport à la surface de repos (A) autour de l'axe d'inclinaison (N) dans un sens d'inclinaison opposé au premier sens d'inclinaison et ainsi déplacer le point de pivotement (C) vers un endroit éloigné du point d'intersection (P) de sorte que le point d'intersection (P) est à la fin de la contre-inclinaison situé entre le point de pivotement (C) actuel et la position du point de pivotement (C) après le dernier pivotement,
- contre-tourner ledit au moins un train de roues (18) avant contre-incliné par rapport au cadre de machine (12) autour de l'axe de direction (S) dans un sens de rotation opposé au premier sens de rotation et ainsi contre-pivoter ledit au moins un train de roues (18) avant contre-incliné par rapport au sol (U) autour du point de pivotement (C) éloigné du point d'intersection (P),
- contre-incliner ledit au moins un train de roues (20) arrière par rapport à la surface de repos (A) autour de l'axe d'inclinaison (N) dans un sens d'inclinaison opposé au deuxième sens d'inclinaison et ainsi déplacer le point de pivotement (C) vers un endroit éloigné du point d'intersection (P) de sorte que le point d'intersection (P) est à la fin de la contre-inclinaison situé entre le point de pivotement (C) actuel et la position du point de pivotement (C) après le dernier pivotement,
- contre-tourner ledit au moins un train de roues (20) arrière contre-incliné par rapport au cadre de machine (12) autour de l'axe de direction (S) dans un sens de rotation opposé au deuxième sens de rotation et ainsi contre-pivoter ledit au moins un train de roues (20) arrière contre-incliné par rapport au sol (U) autour du point de pivotement (C) éloigné du point d'intersection (P).

3. Procédé selon la revendication 2,
**caractérisé en ce que** les étapes de l'inclinaison et de la rotation selon la revendication 1 d'un côté et de la contre-inclinaison et de la contre-rotation selon la revendication 2 de l'autre côté sont exécutées de manière itérative en alternance.

4. Procédé selon une des revendications précédentes,
**caractérisé en ce que** le premier et le deuxième sens d'inclinaison ainsi que le premier et le deuxième sens de rotation vont dans le même sens ou **en ce que** le premier et le deuxième sens d'inclinaison ainsi que le premier et le deuxième sens de rotation vont dans le sens opposé.

5. Procédé selon une des revendications précédentes,
**caractérisé en ce que** le cadre de machine (12) avec ledit au moins un train de roues (18) avant ou/et avec ledit au moins un train de roues arrière (20) est lié par un mécanisme de levage (14, 16) de sorte que le cadre de machine (12) peut être orienté autour d'un axe de tangage (Ni) orthogonal au sens longitudinal du cadre de machine (L) et parallèle à la surface de repos avec un angle de tangage (a) variable, où l'inclinaison ou/et la contre-inclinaison des trains de roues (18, 20) dirigeables par rapport au sol (U) est effectuée par une modification de l'angle de tangage (a) du cadre de machine (12).

6. Machine de traitement du sol (10) comme par exemple une fraiseuse routière, un recycleur ou un surface miner, la machine de travail du sol (10) comprenant un cadre de machine (12) qui repose sur une surface de repos (A) d'un sol (U) via un châssis (22), le châssis (22) comprenant au moins un train de roues avant (18) et au moins un train de roues arrière (20), lesdits trains de roues (18, 20) étant adaptés pour rouler sur le sol (U) dans un sens de déplacement (D), où ledit au moins un train de roues avant (18) et ledit au moins un train de roues arrière (20) peuvent être pivotés par rapport au cadre de machine (12) autour d'un axe de direction (S) respectif associé au train de roues (18, 20) respectif de sorte que le sens de déplacement (D) du train de roues (18, 20) respectif renferme un angle de direction variable avec le sens longitudinal du cadre de machine (L),
**caractérisé en ce que** la machine de traitement du sol (10) comprend un dispositif d'inclinaison par lequel ledit au moins train de roues (18) avant dirigeable peut être incliné par rapport à la surface de repos (A) autour d'un axe d'inclinaison avant (N) renfermant un angle, de préférence un angle droit, avec l'axe de direction (S) respectif associé ainsi qu'avec le sens de déplacement (D) du train de roues (18) et par lequel ledit au moins un train de roues arrière (20) dirigeable peut être incliné autour d'un axe d'inclinaison (N) arrière renfermant un angle, de préférence un angle droit, avec l'axe de direction (S) associé et avec le sens de déplacement (D) du train de roues (20).

7. Machine de traitement du sol (10) selon la revendication 6,
**caractérisé en ce que** le dispositif d'inclinaison comprend un actionneur d'inclinaison, par exemple un arrangement piston-cylindre hydraulique ou un mécanisme à vis par moteur électrique par lequel ledit au moins un train de roues avant (18) ou/et ledit au moins un train de roues arrière (20) peuvent être inclinés autour de l'axe d'inclinaison avant ou arrière (N) par rapport à la surface de repos (A).

8. Machine de traitement du sol (10) selon la revendication 6 ou 7,
**caractérisé en ce que** le cadre de machine (12) est lié audit au moins un train de roues avant (18) ou/et audit au moins un train de roues arrière (20) par un mécanisme de levage (14, 16) de sorte que le cadre de machine (12) peut être orienté par rapport à la surface de repos (A) autour d'un axe de tangage (Ni) orthogonal au sens longitudinal du cadre de machine (L) et parallèle à la surface de repos avec un angle de tangage (α) variable, où le dispositif d'inclinaison comprend le mécanisme de levage (14, 16) et un dispositif de limitation de basculement (48, 50, 52, 54) qui limite un angle de basculement (K) autour d'un axe de basculement (κ) parallèle à l'axe d'inclinaison (N) entre le cadre de machine (12) et au moins un train de roues (18, 20) apte à s'incliner à une valeur plus petite que l'angle de tangage (α) maximal entre le cadre de machine (12) et la surface de repos (A).

9. Machine de traitement du sol (10) selon la revendication 8,
**caractérisé en ce que** le dispositif de limitation de basculement (48, 50, 52, 54) comprend un arrêt mécanique (48, 50) audit au moins un train de roues (18, 20) apte à s'incliner qui peut être amené par une modification de l'angle de tangage (α) du cadre de machine (12) dans un engagement d'appui limitant un basculement relatif du cadre de machine (12) et du train de roues (18, 20) autour de l'axe de basculement (K), avec un contre-arrêt mécanique (52, 54) d'un composant (34, 36) ou section de composant qui peut tourner autour de l'axe de tangage (Ni) ensemble avec le cadre de machine (12).

10. Machine de traitement du sol (10) selon la revendication 9,
**caractérisé en ce que** l'arrêt mécanique (48, 50) ou/et le contre-arrêt mécanique (52, 54) est prévu de manière variable concernant la localisation à la part de machine (38) qui le porte pour modifier l'angle de basculement (κ) maximal entre le cadre de machine (12) et le train de roues (18, 20).

11. Machine de traitement du sol (10) selon la revendication 9 ou 10,
**caractérisé en ce que** le mécanisme de levage (14, 16) comprend une colonne de levage (14, 16) avec une hauteur variable liée audit au moins un train de roues (18, 20), pouvant basculer autour de l'axe de basculement (K), où l'arrêt mécanique (48, 50) est prévu à une structure de réception (38) du train de roues (18, 20) recevant en mouvement périphérique une roue de support, une pluralité de roues de support ou une chaîne à rouleaux (40) et où le contre-arrêt mécanique (52, 54) est prévu à la colonne de levage (14, 16) ou à une structure d'accouplement (34, 36) accouplant la colonne de levage (14, 16) au train de roues (18, 20) de manière basculable.

12. Machine de traitement du sol (10) selon une des revendications 6 à 11,
**caractérisé en ce qu'**au moins un train de roues (18, 20) comprend une roue de support, une pluralité de roues de support ou une chaîne à rouleaux (40).

13. Machine de traitement du sol (10) selon la revendication 12,
**caractérisé en ce que** ledit au moins un train de roues (18, 20) basculable est en appui sur la surface de repos (A) avec une roue de support ou une chaîne à rouleaux (40) même dans une position inclinée par rapport au sol (U).

14. Machine de traitement du sol (10) selon une des revendications 6 à 11,
**caractérisé en ce que** dans une position inclinée par rapport au sol (U) au moins un train de roues (18, 20) basculable est en appui sur la surface de repos (A) avec un cadre recevant en mouvement de circulation la roue de support, la pluralité de roues de support ou la chaîne à rouleaux (40) ou avec un composant de support reçu au cadre.

15. Machine de traitement du sol (10) selon une des revendications 6 à 14,
**caractérisé en ce qu'**elle comprend un dispositif de commande (26) qui après l'activation est adapté pour exécuter une commande de mouvement latéral qui réalise un mouvement latéral selon une des revendications 1 à 5.
